# EUROPEAN PATENT SPECIFICATION

(11) **EP 2 846 967 B1**
(45) Date of publication and mention of the grant of the patent: **08.03.2017**
(21) Application number: 13729454.2
(22) Date of filing: 03.05.2013
(51) Int. Cl.: B23Q 3/06, B23Q 39/02

(54) **MACHINING CENTER FOR MULTIPLE MACHINING**
BEARBEITUNGSZENTRUM FÜR MEHRFACHBEARBEITUNG
CENTRE D'USINAGE DESTINÉ UN USINAGE MULTIPLE

(30) Priority: 07.05.2012 IT FI20120087
(43) Date of publication of application: 18.03.2015
(73) Proprietor: Paolino Bacci S.r.l., 56021 Cascina, (PI) (IT)
(72) Inventor: RUGGIERI, Alberto, I-56025 Pontedera (PI) (IT)
(74) Representative: Mannucci, Michele
(86) International application number: PCT/IB2013/053521
(87) International publication number: WO 2013/168062

(56) References cited:
- US-A- 3 441 265
- US-A1- 2010 054 887

## Description

### Technical Field

The present invention relates to machine tools or machining centers for machining workpieces, for instance made of wood or the like, particularly for machining elongated workpieces, like components of chairs, tables or other furniture pieces.

### Background Art

For manufacturing pieces of furniture like, for instance, chairs and tables, machining of elongated workpieces is often necessary to produce chair backs and legs, table legs or the like. These components shall be usually machined on more faces, generally six faces, i.e. the two head ends and all the side surface. Cutting, contouring, drilling, mortising and other types of machining may be required. In traditional machining centers or machine tools, for machining all the faces of a workpiece it is necessary to arrange it repeatedly on the machine or on several different machines. In many applications, particular equipment is required adequately to block workpieces that may be complex in shape. This equipment is particularly expensive and the need to arrange the workpiece many times on the same machine or on several different machines increases labor costs. This may be acceptable for large batches, but not for small batches, i.e. for small quantities of identical workpieces. The equipment cost shall be amortized on a limited production, hence affecting the manufacturing cost. Labor cost affects the final cost of the product too.

US2010/0054887 discloses a machine tool provided with a structure carrying an operating head with one spindle for working tools. The operating head is movable along numerically controlled vertical and horizontal axes. Workpieces to be machined by the operating head are supported by two tables, which move according to a third, horizontally oriented numerically controlled axis. The two tables have a fixed mutual distance and are provided with T-slots for engaging workpiece blocking members. The workpiece blocking members can be manually mounted on the respective table according to needs.

US-A-3441265 discloses clamp members for clamping workpieces to be machined in a machine tool. The clamp members can be mounted on a table of a machine tool by means of T-slots

WO-A-2008/004264 discloses a machining center according to the preamble of claim 1.

### Summary of the Invention

According to one aspect, the present invention provides a machining center or machine tool, which fully or partly overcomes one or more drawbacks of prior art machines or machining centers. The machine center or machine tool according to the invention is defined in claim 1. The dependent claims concern additional advantageous features of embodiments of the invention.

In particular, according to some embodiments the invention provides a machining center or machine tool allowing all faces of the workpiece to be machined by means of universal equipment, i.e. equipment that enables (through simple adjustments) to handle workpieces that may be different in shape and to position each workpiece on the machine once or twice at the most also to machine all the faces, i.e. all the sides of the workpiece.

According to one aspect, a machining center is substantially provided for machining elongated workpieces, comprising: a bearing structure carrying at least one operating head with one or more tool spindles and movable along numerically controlled axes; a series of first blocking members; a series of second blocking members. The series of first blocking members and the series of second blocking members are movable independently of each other along a base, between at least one loading and/or unloading position spaced from the bearing structure and a working position near the bearing structure, according to respective numerically controlled axes. The workpieces are machined through numerically controlled movements of both the head, with respect to the bearing structure, and the blocking members, along the base. Moreover, the first blocking members can be adjusted independently of one another according to at least two adjusting directions, wherein a direction allows modifying the distance between said first blocking members. Furthermore, the second blocking members can be adjusted independently of one another according to at least two adjusting directions, wherein a direction allows modifying the reciprocal distance of said second blocking members.

The blocking members can be therefore of the universal type, for instance jaws or pressing members. The opportunity to make adjustments along these at least two adjusting directions allows to set the reciprocal position of the blocking members of the two series of blocking members based upon the workpiece shape and dimension. As two series of blocking members are available, it is possible to move the workpiece from one series of blocking members to the other, hence machining the whole workpiece on one machine. In some embodiments the workpiece may be transferred manually. The two series of blocking members may be oriented so that the workpiece cannot be directly transferred from one to the other. However, the workpiece is preferably transferred automatically through controlled movements of the blocking members and the slides and/or the tables carrying them. In this case the workpiece is positioned on the machine just once. To this end, the blocking members are arranged so that the first ones may be positioned facing the second ones and the two series of blocking members may move towards and away from each other so as to take a minimum distance position, wherein a workpiece held by the first blocking members can be clamped by the second blocking members. The workpiece is thus automatically transferred from the blocking members of one series to those of the other series.

Advantageously, the first blocking members and the second blocking members can be adjusted independently of each other according to the at least two adjusting directions mentioned above, using the operating head as a reference abutment, arranging it each time in a given position along its numerically controlled axes by means of a numerically controlled system. The adjustment may be manual or automatic. In this way, using the operating head as a reference abutment for setting the position of the single blocking members, the errors, if any, of the guides or other parts of the machine are automatically corrected. Namely, the workpiece position, defined by abutment surfaces embodied by the blocking members, is identified through reciprocal cooperation of the operating head and the reference workpiece, at least the head position being numerically controlled. For example, in case of form defect in the guide of the operating head or of the blocking members, the defect is automatically corrected.

Each blocking member may be carried by a slide which is movable along one or two adjusting directions, for instance two orthogonal directions. In some embodiments the slide may move along a first horizontal direction and along a second, either vertical or horizontal direction. One of the two directions, in particular the first direction, allows adjusting the reciprocal distance between blocking members of the same series. In this way it is possible to block curved workpieces of different shapes. In case the second adjusting direction is horizontal, curved workpieces lying in a horizontal plane can be machined. In case the second adjusting direction is vertical, curved workpieces lying in a vertical plane can be machined. The blocking members are preferably arranged so as to allow adjustment according to a first direction, preferably horizontal, to adapt the reciprocal distance of the blocking members of each series. Moreover, the blocking members can be adjusted along a second horizontal direction and a third vertical direction, so as to obtain maximum flexibility for machining curved three-dimensional workpieces, i.e. workpieces not lying in a plane. In general, for all the adjustments, on two or three axes, the operating head (or more operating heads) is preferably used as an abutment, placed each time in the desired spatial position for positioning each single blocking member, through a manual or automated movement, to obtain a fast and accurate positioning correcting the form defects, if any, of the guides or other mechanical components.

The two groups or series of blocking members are preferably movable so as to be placed facing each other and allow automatic transfer of a workpiece from one series of blocking members the other.

Using two series of blocking members movable independently of each other along the machine base between a loading and/or unloading position and a working position, and, if necessary, between three positions, respectively loading, working and unloading position, loading and unloading can occur in shadow time, i.e. while the machining center is working a workpiece carried by one series of blocking members.

According to a different aspect, a machining center is provided for machining elongated pieces, comprising: a bearing structure carrying at least one operating head with one or more tool spindles and movable along numerically controlled axes; a series of first blocking members; a series of second blocking members. Moreover, the series of first blocking members and the series of second blocking members are arranged and movable with respect to each other so as to move said first blocking members and said second blocking members, facing each other, reciprocally towards each other to transfer a workpiece, temporarily held by the first blocking members, to the second blocking members, and vice versa. Moreover, the first blocking members can be adjusted independently of one another according to at least two adjusting directions, wherein a direction allows modifying the distance between said first blocking members. The second blocking members can be adjusted independently of one another according to at least two adjusting directions, wherein a direction allows modifying the distance between said second blocking members.

According to this embodiment, the independent movement of the two series of blocking members along the base to allow loading and/or unloading in shadow time may be omitted, thus renouncing this advantage. For example, only one table, carriage or slide may be provided, moving along the base between the loading and/or unloading position and the working position, and carrying the series of first blocking members and the series of second blocking members, movable with respect to one another, automatically to transfer the workpiece from the first blocking members to the second blocking members and vice versa.

In some embodiments each blocking member comprises an upper jaw and a lower jaw, movable with respect to each other to clamp the workpiece. The jaws may define an upper reference surface and a lower clamping surface. In some particularly advantageous embodiments, an auxiliary abutment is associated with each blocking member, or with some of them, wherein this abutment can be adjusted with respect to the respective blocking member so as to define how much the workpiece projects with respect to the clamping member. Under some operating conditions, this is particularly significant to avoid collision between tools and workpiece, as it will be apparent from the detailed description of some embodiments.

Namely, the piece may be mounted on the blocking members projecting therefrom so as to be machined frontally as well as from the top and the bottom, if necessary. To this end, the distance between the blocking members and the base below, i.e. between the blocking members and a table carrying them, is advantageously sufficient to enable the operating head to be inserted under the workpiece held by the blocking members.

In advantageous embodiments the blocking members can be adjusted according to two orthogonal adjusting direction, for example both horizontal, or one horizontal and one vertical.

In other embodiments the blocking members can be adjusted according to a first horizontal direction and a second vertical direction.

Usually, the base, on which the blocking members shift to move the workpiece towards and away from the operating head, has a horizontal extension; one of the adjusting directions may be therefore parallel to the longitudinal extension of the base and the other may be orthogonal to the longitudinal extension of the base.

The blocking members can be preferably adjusted along three adjusting directions. This allows high flexibility of the blocking members that can thus adapt to workpieces of significantly different shapes. The adjusting directions, along which the blocking members are separately moved to adapt to the workpiece shape and the necessary working sequence, are preferably orthogonal to one another.

In some advantageous embodiments individual angular adjustment of each blocking member is also possible. For instance, angular adjustment may be provided around an axis parallel to one of the translation adjusting directions. In one advantageous embodiment the angular adjustment is around a vertical axis. It is also possible to perform angular adjustments around more than one axis for each blocking member.

In one advantageous embodiment of the invention, each of said first blocking members and of said second blocking members is carried by a respective first slide, movable along the adjusting direction and allowing adjusting the distance between the blocking members. Each of the blocking members is preferably mounted on the respective first slide with the interposition of a respective second slide, movable with respect to the first slide along the second adjusting direction, wherein the first adjusting direction and the second adjusting direction are horizontal and preferably substantially orthogonal to each other.

In preferred embodiments the first slides of the first blocking members and the first slides of the second blocking members are supported by respective common tables movable along said base. The common table carrying the first blocking members and the common table carrying the second blocking members are movable independently of each other along the base according to numerically controlled axes.

In some embodiments the first blocking members and the second blocking members are carried by the respective common table with the interposition of a respective third slide arranged and controlled so as simultaneously moving the respective first blocking members and second blocking members orthogonally to the movement direction of the respective movable table along said base.

The dimensions of the slides are such as to allow the operating head to be inserted between the workpiece and the table moving along the base of the machining center without mutual collision.

To decrease the number of slides and guides necessary to perform the numerically controlled movements, as well as the adjusting movements and the movements towards and away from each other, of the two series of blocking members (when provided), in a different embodiment the first slides of the first blocking members and the first slides of the second blocking members can slide along a first and a second guide respectively fixed to said base. The slides can move either independently of one another, to adjust the distance between the blocking members, or synchronously, to perform working movements according to the numerically controlled axis parallel to the base. Each of said first slides can carry a respective second slide, movable to adjust the blocking members in a second adjusting direction, preferably horizontal and preferably orthogonal to the base. When, through translation of the respective second slides with respect to the first slides, all the blocking members of a series move simultaneously, it is possible to obtain a movement of the first blocking members towards the second blocking members for transferring automatically the workpiece from one blocking members to the other.

In preferred embodiments the series of first blocking members and the series of second blocking members are advantageously arranged and movable with respect to each other so as to place the series of first blocking members facing the series of second blocking members and to move said first blocking members and said second blocking members towards each other so as to transfer a workpiece temporarily held by the first blocking members to the second blocking members, and vice versa.

Further advantageous features and embodiments will be described hereinafter and in the attached claims, which form an integral part of the present description.

### Brief description of the drawings

The invention will be better understood by following the description and the accompanying drawing, which shows non-limiting practical embodiments of the invention. More in particular in the drawing, wherein equal or equivalent parts are indicated with the same reference numbers:
Fig. 1 is a front view of a machining center in a first embodiment;
Figs. 2 and 3 are local sections according to the lines II-II and III-III of Fig. 1;
Fig. 4 shows a detail according to IV-IV of Fig. 2;
Fig. 5 is a view according to V-V of Fig. 4;
Fig. 6 is a plan view of the machining centre arranged to machine curved pieces, according to a curve lying on a horizontal plane;
Fig. 7 is a view according to VII-VII of Fig. 6, wherein the two tables are translated with respect to Fig. 6;
Fig. 8 is a detail of a series of blocking members with the respective slides according to a view along line VIII-VIII of Fig. 2;
Fig. 9 is a plan view of a machining centre according to the previous figures, wherein a semi-finished workpiece is being transferred from one to the other group or series of blocking members carried by two independent tables;
Fig. 10 is a front view similar to that of Fig. 1, in a modified embodiment;
Fig. 11 is a plan view of the blocking members in the arrangement of Fig. 10, wherein the bearing structure carrying the operating head is omitted;
Fig. 12 is a schematic side view of a machining center in a modified embodiment, with two opposite operating heads movable along a common gantry;
Fig. 13 is a front view of a modified embodiment;
Fig. 14 is a plan view according to XIV-XIV of Fig. 13;
Fig. 15 is a side view according to XV-XV of Fig. 13; and
Fig. 16 is a front view of a different embodiment of a machining center with a single table carrying two series of blocking members.

### Detailed description of embodiments of the invention

The detailed description below of example embodiments is made with reference to the attached drawings. The same reference numbers in different drawings identify the equal or similar elements. Furthermore, the drawings are not necessarily scale. The detailed description below does not limit the invention. The protective scope of the present invention is defined by the attached claims.

In the description, the reference to "an embodiment" or "the embodiment" or "some embodiments" means that a particular feature, structure or element described with reference to an embodiment is comprised in at least one embodiment of the described object. The sentences "in an embodiment" or "in the embodiment" or "in some embodiments" in the description do not therefore necessarily refer to the same embodiment or embodiments. The particular features, structures or elements can be furthermore combined in any adequate way in one or more embodiments.

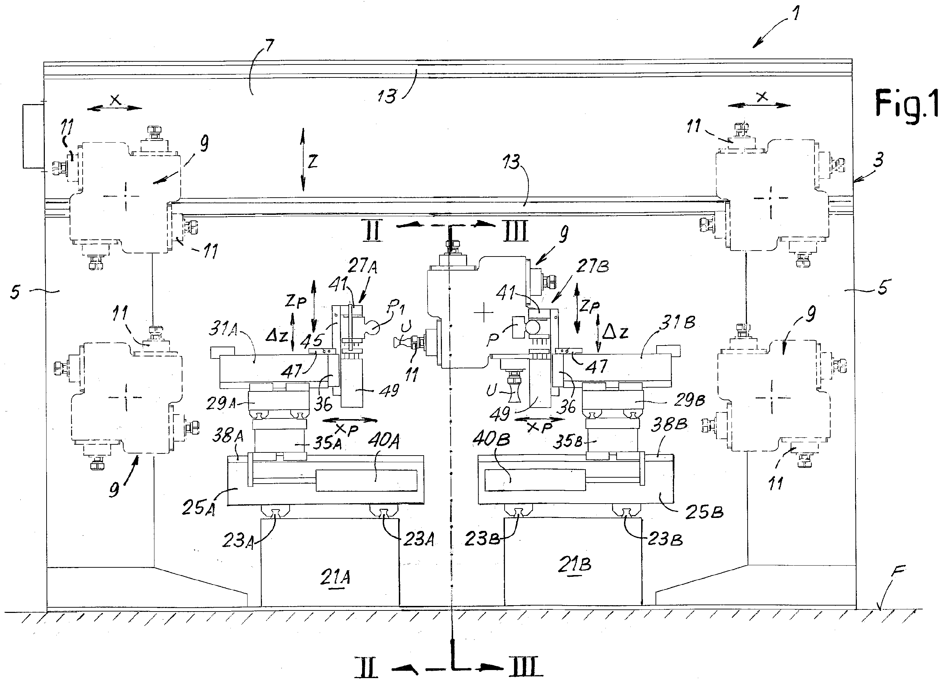

With initial reference to Figs. 1 to 9, a first embodiment of a machining center according to the invention will be described. Fig. 1 is a front view of the machining center, indicated as a whole with number 1, with some parts removed or simplified. The machining center 1 comprises a bearing structure onto which an operating head or tool head moves, shown in Fig. 1 in four different positions. For the sake of simplicity in Fig. 1 the head supporting slides have been omitted, i.e. the slides through which the head is moved for instance along two numerically controlled axes of translation, one horizontal and parallel to the beam of the bearing structure, and the other vertical. The head supporting slides are described below with reference to other figures.

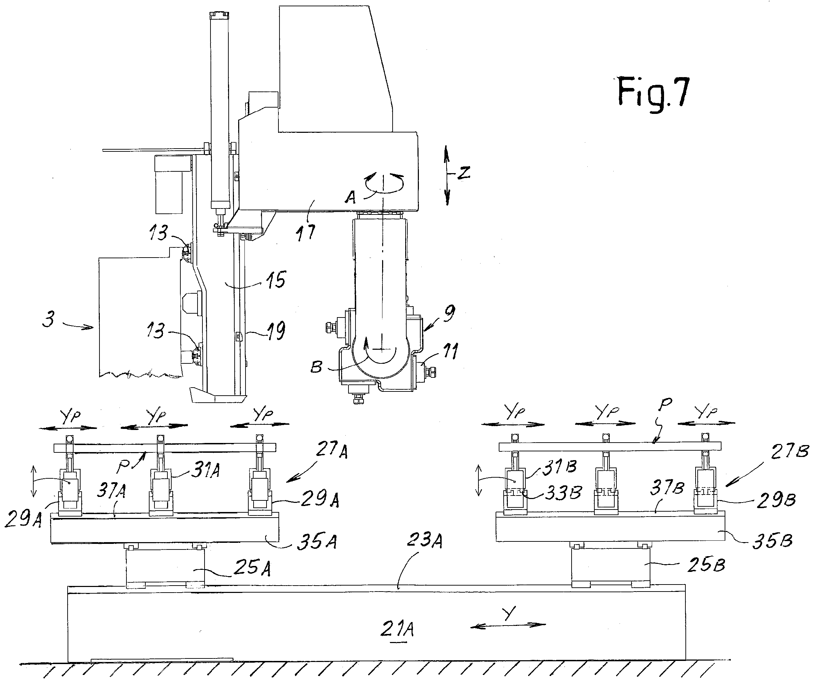

The bearing structure illustrated by way of example in Fig. 1 is indicated as a whole with number 3. In the illustrated embodiment the bearing structure 3 is a gantry structure with two uprights 5 and one beam 7. Along the beam 7 a slide moves (not shown in Fig. 1 for the sake of simplicity, but represented for instance in Fig. 7) carrying the operating head 9. In the illustrated embodiment the operating head 9 carries four spindles, for instance for electro-spindles, indicated with 11. Each electro-spindle 11 may carry a respective tool U, if necessary interchangeable. The machining center may be provided with a tool magazine and a tool changing system, not shown.

The shape of the head and the number of electro-spindles 11 with which it is provided may be different than those illustrated just by way of example in Fig. 1.

Fig. 1 schematically shows four end positions that the operating head 9 can achieve, and one intermediate position along the longitudinal extension of the beam 7.

Through guides 13, integral with the beam 7, the operating head 9 moves along a first numerically controlled horizontal translation axis indicated with X. Fig. 7 shows a slide or carriage 15 movable along the guides 13 and carrying a second slide or carriage 17 movable along guides 19, which are integral with the slides 15 and extend along the movement direction of the second numerically controlled axis Z of vertical translation. The second slide or carriage 17 carries the operating head 9, which projects downwardly therefrom. In the illustrated embodiment the operating head 9 is also provided with a double rotary motion according to numerically controlled rotation axes schematically indicated with A and B. In other less advantageous embodiments only one rotation axis may be provided. In more complex embodiments more than two numerically controlled rotation axes may be provided.

A base, indicated as a whole with number 21, extends under the beam 7. In the embodiment illustrated in Figs. 1 to 9, the base 21 is actually formed of two blocks 21A, 21B that can be joined together directly, or indirectly through the foundation F onto which the machining centre 1 is installed. In general, in the present description and the attached claims base means any fixed structure, comprised of one or more parts or components, onto which the elements described above move, for moving the workpieces P.

As shown in Figs. 1 to 9, on the base 21 (21 A, 21B) guides 23A and 23B are provided, onto which a first table 25A and a second table 25B slide. The first table 25A carries a series or group of first blocking members 27A, while the second table 25B carries a series of second blocking members 27B.

In the illustrated example, each table 25A and 25B carries a series of three blocking members 27A and 27B respectively. Each blocking member 27A, 27B is carried not by the respective table 25A, 25B directly, but by a series of slides that are arranged between the table and the blocking member and allow each blocking member to be adequately adjusted as described below.

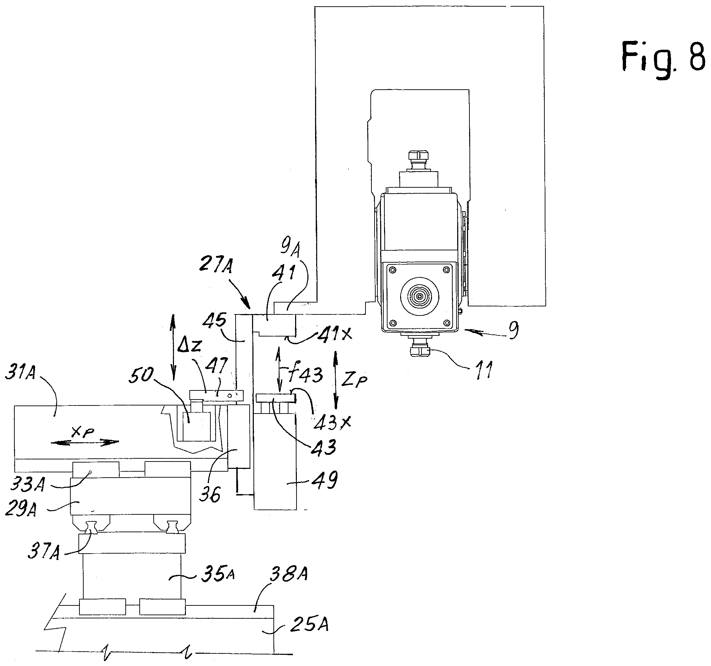

More in particular, as shown also in the detail of Fig. 8 illustrating the table 25A, each blocking member 27A, 27B is carried by a first slide 29A, 29B respectively. Each blocking member 27A, 27B is carried by the respective slide 29A, 29B with the interposition of a respective second slide 31 A, 31 B. Each second slide 31A, 31B moves in an adjusting direction xp along guides 33A, 33B, with which the first slide 29A is provided; each blocking member 27A, 27B can be therefore adjusted in the direction xp independently of the other blocking members both of its series and the opposite series.

The first slides 29A of the first blocking members 27A are supported by a third common slide 35A and the first slides 29B of the second blocking members 27B are in turn carried by a third common slide 35B. The slides 35A and 35B are provided with guides 37A and 37B respectively, along which the first slides 29A and 29B of the first and second blocking members 27A and 27B can be respectively adjusted, independently of each other, according to an adjusting direction yp (see Fig. 7).

With this arrangement, each blocking member 27A and each blocking member 27B can be adjusted according to the two directions xp and yp independently of the other blocking members.

In advantageous embodiments, each blocking member 27A and 27B can be adjusted also in vertical direction according to the arrow zp (Fig. 8). The vertical movement according to the direction zp for adjusting each blocking member 27A and 27B is independent of the other blocking members, so that each blocking members 27A, 27B can be substantially adjusted independently of the other blocking members along three orthogonal adjusting directions.

To adjust the blocking members 27A, 27B, on each second slide 31A, 31B a guiding shoe 36A, 36B is for instance provided for each blocking member. The single blocking members 27A, 27B are guided along the guiding shoes 36A, 36B and can be therefore individually adjusted in a vertical direction.

In advantageous embodiments, each blocking member 27A, 27B has a pair of jaws, wherein each jaw defines a clamping surface or a reference abutment surface for the workpiece. With specific reference to Fig. 8, showing one blocking member 27A, each blocking member has an upper jaw 41 and a lower jaw 43. The upper jaw 41 and the lower jaw 43 are connected to each other through a substantially vertical beam 45, and they move therefore integrally in the vertical direction zp. A brake 47 is provided to stop the beam 45 once the desired vertical position has been achieved. The lower jaw 43 is provided with an opening and closing movement according to the double arrow f43 controlled by an actuator, for instance a hydraulic or pneumatic cylinder-piston actuator 49, connected to the respective beam 45.

Each blocking member 27A and, analogously, each blocking member 27B can be translated upwards through a cylinder-piston actuator 50 carried by the respective second slide 31A, 31B. This movement is indicated with ΔZ for instance in Fig. 8; it allows the surface 41X of the upper jaw 41 to be removed from the workpiece without friction between the workpiece and the same surface 41 X, when the workpiece shall be unloaded or transferred to the opposite blocking members mounted on the other table. The upward movement of the blocking member 27A or 27B according to ΔZ controlled by the actuator 50 is obviously combined with an opening movement of the jaws 41, 43 controlled by the actuator 49.

The actuator 50 is advantageously connected to the brake 47 of each blocking member 27A, 27B. In this way the brake 47 performs two functions: it holds the respective blocking member 27A, 27B at the correct height (position zp) and transmits the upward movement according to Δz thereto.

Advantageously, the upper jaw 41 defines a reference surface 41X and the lower jaw 43 defines a clamping surface 43X.

Each workpiece, schematically shown at P, is thus blocked by each blocking member 27A, 27B closing the jaws 41, 43 in a reference position defined by the reference surface 41X of the upper jaw 41. The vertical adjustment according to zp is performed as described below, to arrange each upper jaw 41 of each blocking member 27A, 27B in the adequate position to perform machining on the piece referred to the reference abutment surface 41 X.

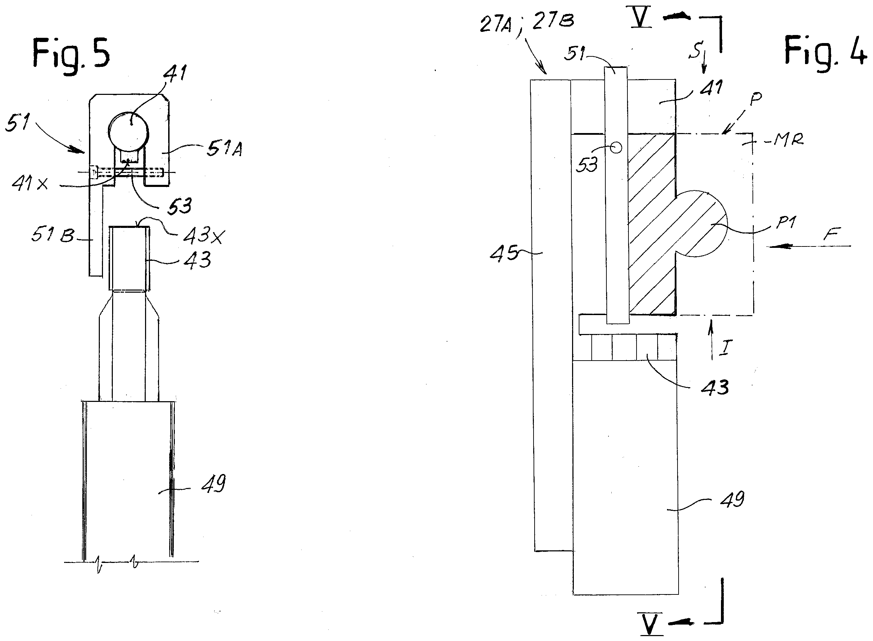

Figs. 4 and 5 schematically show one blocking member 27A, 27B separately from the other components of the machine or machining center. To machine the side surface of the workpiece P facing opposite the beam 45, the workpiece P must project with respect to the jaws 41 and 43 by an adequate space depending upon both the cross dimensions of the workpiece P and the machining to be performed.

According to some advantageous embodiments, to arrange the workpiece P so that it adequately projects with respect to the jaws 41 and 43 and can be thus machined without interference between the tools carried by the operating head 9 and the jaws 41, 43, each blocking member 27A, 27B or at least two of the blocking members 27A or 27B are provided with auxiliary stops 51 illustrated in detail in Figs. 4 and 5. In the illustrated embodiment, each auxiliary stop 51 is shaped like a clamp that can be blocked, through a screw member 53, on the respective upper jaw 41 of the corresponding blocking member 27A or 27B. For a more effective clamping, at least one part of the upper jaw 41 may have a circular cross section corresponding to a seat formed by the respective auxiliary stop 51 having two arms 51 A, 51B that project downwards and can be elastically clamped through a screw member 53, as shown in particular in Fig. 5. The position of each auxiliary stop 51 with respect to the upper jaw 41 can be set for each specific workpiece P, so that this latter can be correctly positioned, adequately spaced from the beam 45 and thus adequately projecting from the jaws 41 and 43.

The auxiliary stops 51 may be positioned manually. In other embodiments the auxiliary stops may be positioned in either automatic or assisted way, in a manner known to those skilled in the art. For example, an adjustable stop may be provided, carried by either of jaws 41, 43 with an adjusting actuator.

Positioning each blocking member 27A, 27B vertically, i.e. arranging each blocking member 27A, 27B in the required position according to the direction zp, can be performed either manually or automatically as described, for instance, in EP2035199.

As it is clearly apparent in particular in Fig. 1, in the arrangement described above, when the piece P is mounted on the table 25A, the operating head 9 can machine the ends of the workpiece P as well as the upper, lower, and side faces thereof, which are clear of the blocking members 27A. In practice, the tools can machine the whole face of the workpiece P, mounted on the table 25A, oriented to the right in Fig. 1, whereas they can machine all the areas of the remaining faces, i.e. the upper one, the lower one and the one opposite to the right face in Fig. 1, with the exception of those affected by the blocking members 27A. The slides 29A, 31A, 35A carrying each blocking member 27A have such a height that the operating head 9 can also machine the lower face of the workpiece P fixed on the blocking members 27A without interfering with the table 25A underneath.

With reference for instance to Fig. 1, a workpiece P is mounted on one group of blocking members 27A or 27B and translated, through the movement of the respective table 25A or 25B, to the working area where there is the operating head 9. The numerically controlled movements of the operating head 9 according to the translation axes X and Z and the movement of translation of the table 25A or 25B according to the numerically controlled axis Y, combined, if necessary, with the numerically controlled movements around the rotation axes A and B, allow to machine the various accessible faces of the workpiece, with the only limitation of the obstacles constituted by the blocking members. Once the machining has been completed, the semi-finished workpiece is transferred to the other blocking members carried by the other table. For example, if the first series of machining operations has been performed with the workpiece P blocked by the blocking members 27A, it is then transferred to the blocking members 27B to machine the faces inaccessible during the first step.

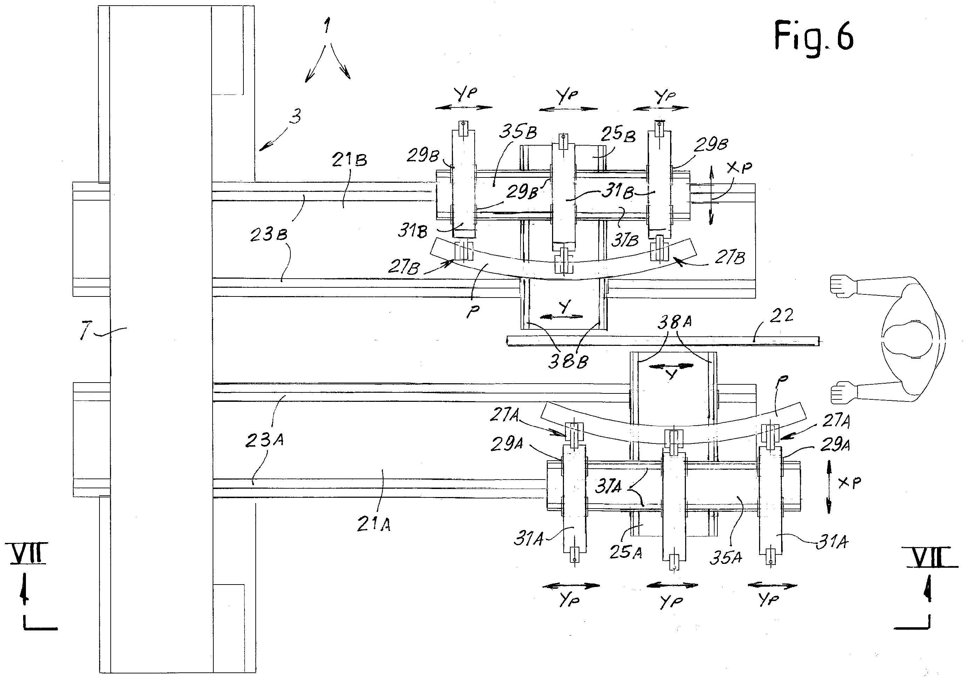

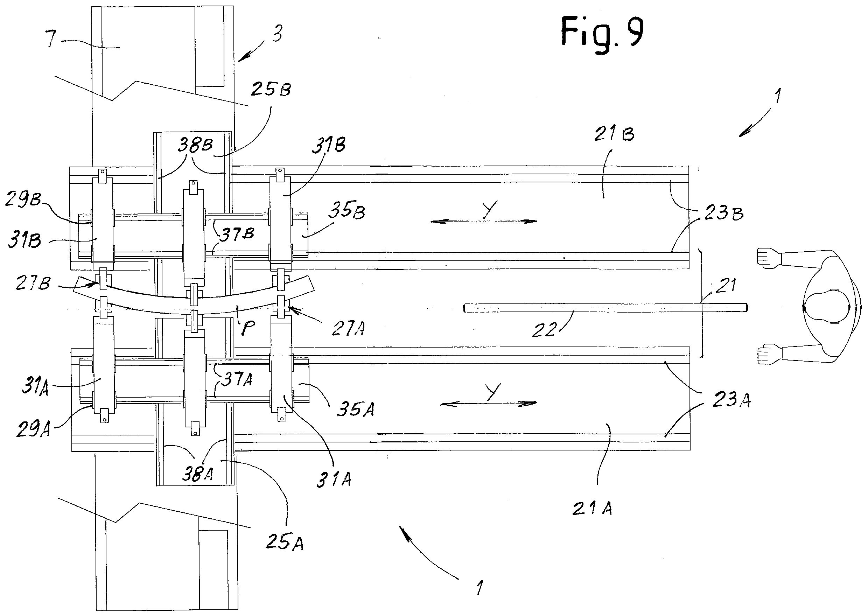

To this end (see in particular Figs. 6 and 9) it is sufficient to translate the two tables 25A, 25B along the numerically controlled axes Y, with which they are provided and which extend parallel to the base 21, to bring them facing each other (Fig. 9), and, through a movement of either of, or both, the slides 35A, 35B, to move the two series of first blocking members 27A and of second blocking members 27B towards each other, wherein the first blocking members still hold the piece and the second blocking members are opened to receive the workpiece between the respective jaws. When the semi-finished workpiece P is placed between the jaws of the blocking members 27B, the jaws close to clamp the semi-finished workpiece P, which is now constrained not only to the blocking members 27A of the table 25A but also to the blocking members 27B carried by the table 25B.

Once the semi-finished workpiece P has been blocked by the blocking members 27B of the table 25B, the blocking members 27A, that had blocked it throughout the first machining step, can open and the slide 35A can move away from the opposite table 25B with a movement of either of, or both the slides 35A, 35B, so that the workpiece P is constrained to the blocking members 27B and released by the blocking members 27A and the surfaces thereof which were previously inaccessible by the tools of the operating head 9 can now be machined.

As mentioned above, to facilitate the transfer of the workpiece from the blocking members 27A to the blocking members 27B, avoiding friction against the jaws 41, 43 of the blocking members 27A, these jaws are opened and lifted according to Δz before the blocking members 25A and the blocking members 25B move away from each other, so that when this movement occurs the semi-finished workpiece P is no more in contact with the jaws of the blocking members 25A.

At this point, the second working step can be performed on the workpiece P to obtain the finished piece.

Transferring the workpiece P from the blocking members 27A to the blocking members 27B may occur at any suitable place along the longitudinal extension of the base 21 to optimize the machining times.

Once the blocking members 27A have been released, the table 25A can be translated towards the loading area to load a new workpiece P. The loading area may be advantageously arranged at the farthest end of the base 21 with respect to the gantry 3. The new workpiece P may be loaded on the blocking members 27A of the table 25A in shadow time, i.e. while the previous workpiece, now blocked by the blocking members 27B, is still machined by the operating head 9. Once the machining of the workpiece on the table 25B has been completed, this latter is translated to the unloading area while the table 25A with the new workpiece is brought to the working area.

The unloading area may be the same as the loading area. A partition 22 may be provided between the guides 23A and the guides 23B (Fig. 6).

Obviously, the cycle briefly described above may be reversed, performing the first working step on the piece P while this is blocked by the blocking members 27B on the table 25B, and the second working step when the semi-finished workpiece is carried by the table 25A and held by the blocking members 27A.

Thanks to the automatic transfer of the workpiece from the blocking members 27A to the blocking members 27B (or vice versa), it is possible to perform all machining operations on a single machining center and arrange the workpiece P manually only once, when the machining cycle starts. In other embodiments the initial loading may be automatic too, performed for example through an automatic loader. The position of the workpiece P on the table 25B is set through the relative numerically controlled movements of the two tables, as regards the position along the numerically controlled axis Y parallel to the base 21. The position in cross direction may be set either through a numerically controlled movement of the slides 35A, 35B, or through a pneumatic or hydraulic fixed-stroke actuator 40A, 40B carried by the movable tables 25A, 25B. In this case, positioning may occur as follows. Each actuator 40A, 40B moves the respective slide 35A, 35B by a fixed length according to the direction xp, so that the blocking members 27A and 27B move towards each other. For each workpiece, these blocking members are positioned so that, once the fixed stroke of toward movement imposed by the actuators 40A, 40B on the slides 35A, 35B has been performed, the reciprocal position of the blocking members 27A, 27B of the two series or groups of blocking members is such that the semi-finished workpiece P, held by the blocking members 27A, is in the right position to be blocked by the blocking members 27B. Once the semi-finished workpiece has been blocked by the blocking members 27B, it can be released by the blocking members 27A and the slides 35A, 35B can move away from each other again.

In some cases the movement of the blocking members 27A and of the blocking members 27B towards each other may be performed by means of only one of the cylinder-piston actuators 40A, 40B.

To perform the above mentioned transfer without collisions between the blocking members and/or between the blocking members and the workpiece, a suitable electronic program may be provided. The program is designed so as to define in advance the right positions of the two series or groups of blocking members 27A, 27B, based upon the shape of the semi-finished workpiece P, i.e. the shape the workpiece has after a first working series performed while it is blocked by the blocking members 27A, and upon adjustable models of the blocking members of the two series of blocking members 27A, 27B. These positions are defined so as to avoid collisions between the blocking members of the two series and between the blocking members and the workpiece, and to allow the raw workpiece P, blocked by the blocking members 27A, to be machined as desired and then to machine the semi-finished workpiece P, blocked by the blocking members 27B, after having transferred it as described above.

From Figs. 6 and 9 it is clearly apparent that adjusting according to xp and yp each of the blocking members 27A and 27B, forming the two series of blocking members carried by the table 25A and 25B respectively, allows to block workpieces P that may be complex in shape and to hold them alternatively on the table 25A and then on the table 25B (or vice versa). For example, Fig. 6 shows how the piece P, curved in a horizontal plane, may be blocked both by the blocking members 27A and by the blocking members 27B simply adjusting the position along the direction xp. The distance between the blocking members 27A, 27B along the direction yp may be adequately adjusted based upon the workpiece dimension and curvature, as well as the areas that are more stressed during machining, taking into account that a greater accuracy can be achieved if the workpiece is blocked as near as possible to the areas that are more stressed by the tools working the various surfaces.

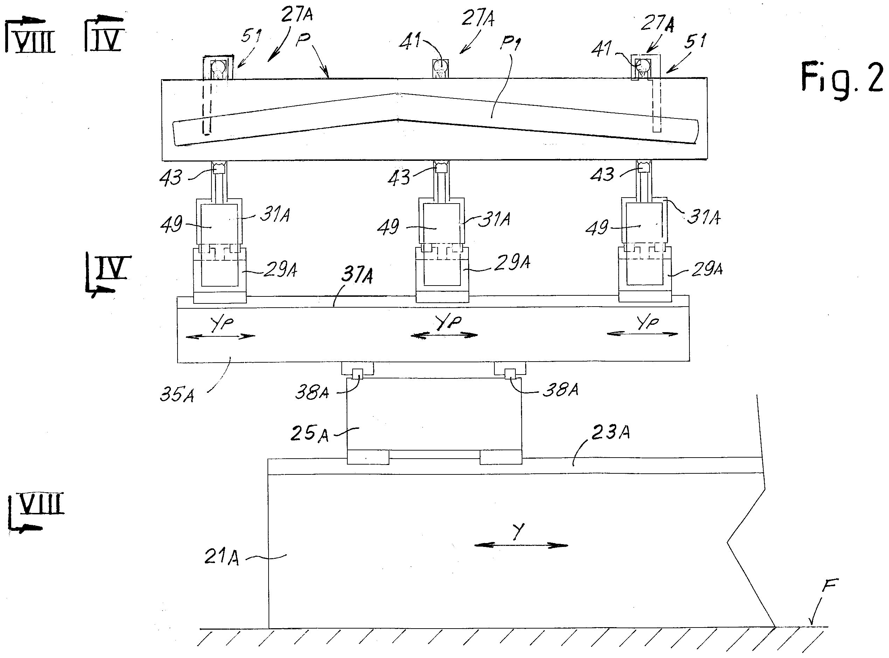

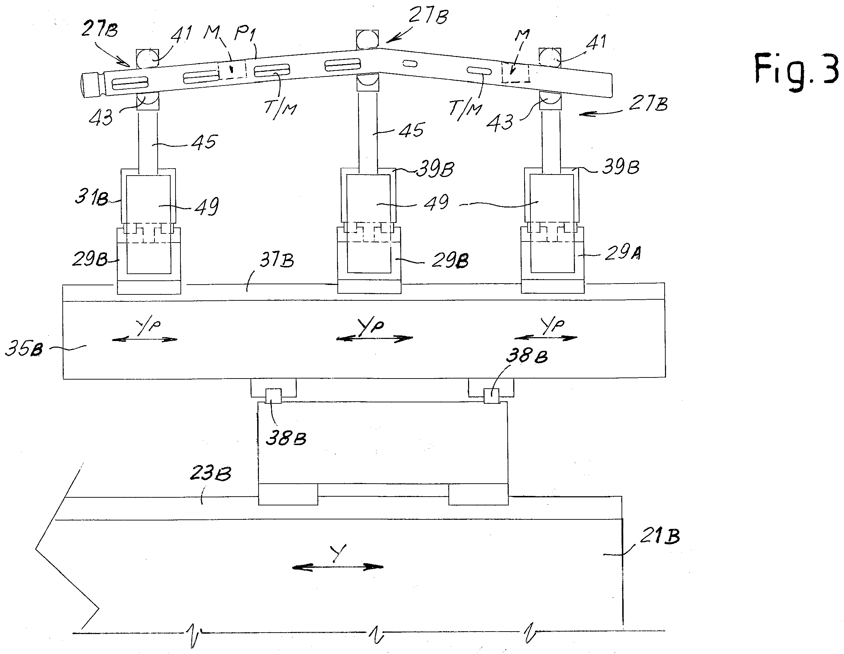

The independent adjustment of each blocking members 27A, 27B along the vertical direction zp allows exactly to block workpieces curved in a vertical plane, as shown in particular in Figs. 2, 3, and 4. More in particular, in the example of Figs. 2, 3, and 4, two subsequent machining steps of the same workpiece are illustrated. In Figs. 2 and 4 the workpiece P is blocked by the blocking members 27A of the table 25A and, in this first step, it is machined to contour the face facing the median plane of the bearing structure 3 carrying the operating head 9. In the illustrated example it has been assumed the workpiece is a parallelepiped and shall be machined to obtain a workpiece which is curved in a vertical plane. In Fig. 4 the cross section of the portion of material (indicated with MR) removed in this first step is indicated in broken line. In the first step a portion PI is machined, which projects with respect to the piece blocked by the blocking members 27A of the table 25A. This portion will be then blocked by the blocking members 27B, thus releasing the remaining part of the workpiece so that this latter can be machined by the tools of the operating head 9 until to obtain the final shape illustrated in Fig. 3. From Fig. 4 it is clearly apparent that during the first working step the workpiece, held by the blocking members 27A, may be machined by the tools of the operating head 9 not only from the front according to the arrow F, but also from the top according to the arrow S and from the bottom according to the arrow I. This is possible thanks to the distance at which the blocking members 27A hold the workpiece P from the table 25A below (see Fig. 1).

Fig. 3 schematically show tenons and/or mortises T, M that may be produced on the workpiece P1. In particular, the upper mortises M are produced by machining the workpiece from the top according to the arrow S. Mortises and tenons may be analogously obtained from the bottom.

This possibility of machining three faces is an advantageous characteristic of some embodiments of the present invention. By transferring the workpiece from one to the other group of blocking members 27A, 27B, machining each point of the workpiece surface becomes thus possible.

By comparing Figs. 2 and 3 it is clear that adjusting the single blocking members 27A, 27B of the two series of blocking members associated with the tables 25A and 25B in the vertical direction zp allows not only to block curved workpieces but also to place the reference and clamping surfaces at different heights in the two subsequent working steps, i.e.: the step wherein the workpiece P is held by the blocking members 27A (Fig. 2) and the step wherein the workpiece P is clamped by the blocking members 27B (Fig. 3).

The possibility of adjusting each blocking member 27A of the first series and each blocking member 27B of the second series according to three directions xp, yp, and zp, allows to produce workpieces curved both in a vertical and in a horizontal plane, thus achieving a significantly high flexibility with standard blocking systems, that can be adapted to the workpiece each time. The blocking members 27A, 27B may be adjusted along the directions xp, yp, and zp manually, preferably using the operating head 9 as a reference abutment, thus correctly positioning each blocking member 27A, 27B. In fact, the operating head 9 may be arranged each time in a precise numerically controlled position along the numerically controlled axes X and Z. The operating head 9 may have an abutment (schematically indicated with 9A in Fig. 8) to define the position at which the various blocking members shall be brought. The various blocking members may be moved either manually or by means of assisted systems, not necessarily numerically controlled, to go each time into contact with the abutment 9A, which has been adequately positioned. The position of the operating head 9 and hence of the abutment 9A is set for each blocking member 27A, 27B to be positioned. Fig. 8 schematically shows the way for positioning a blocking member 27A in direction zp lifting it, either manually or by means of an actuator, and bringing it into contact with the abutment 9A, which has been previously positioned. The brake 47 stops vertically the blocking member 27A once it has achieved the position. Positioning along xp and yp may be obtained in a similar way, moving the slides 31A and 29A either manually or through an actuator, that may be numerically controlled, and always using as reference abutment the operating head 9 or, for instance, a part 9A thereof.

In the embodiment described above the two series of first blocking members 27A and second blocking members 27B are indirectly carried by the two tables 25A, 25B, each movable along the base 21, i.e. along the respective portion or semi-base 21A, 21B of the base 21. The slides 29A, 31A, 35A and 29B, 31B, and 35B are interposed respectively between each table 25A, 25B and the blocking members 27A, 27B. The slides 29A and 31A, or 29B and 31B are used for adjusting each blocking member 27A or 27B according to the two horizontal directions xp and yp. The slide 35A or 35B allows the blocking members 27A or 27B to move simultaneously in the direction xp, thus moving reciprocally nearer to each other, and vice versa, i.e. performing a combined movement of the blocking members 27A and 27B towards each other to transfer the workpiece from the series of blocking members 27A to the series of blocking members 27B or vice versa, as schematically shown in Fig. 9 (see above). The reciprocal movement of the slides 35A, 35B towards and away from each other may be, for instance, controlled by the cylinder piston actuators 40A, 40B (Fig. 1) for the two slides 35A, 35B respectively, wherein, to this end, the slides are guided on guides 48A, 38B integral with the tables 25A, 25B.

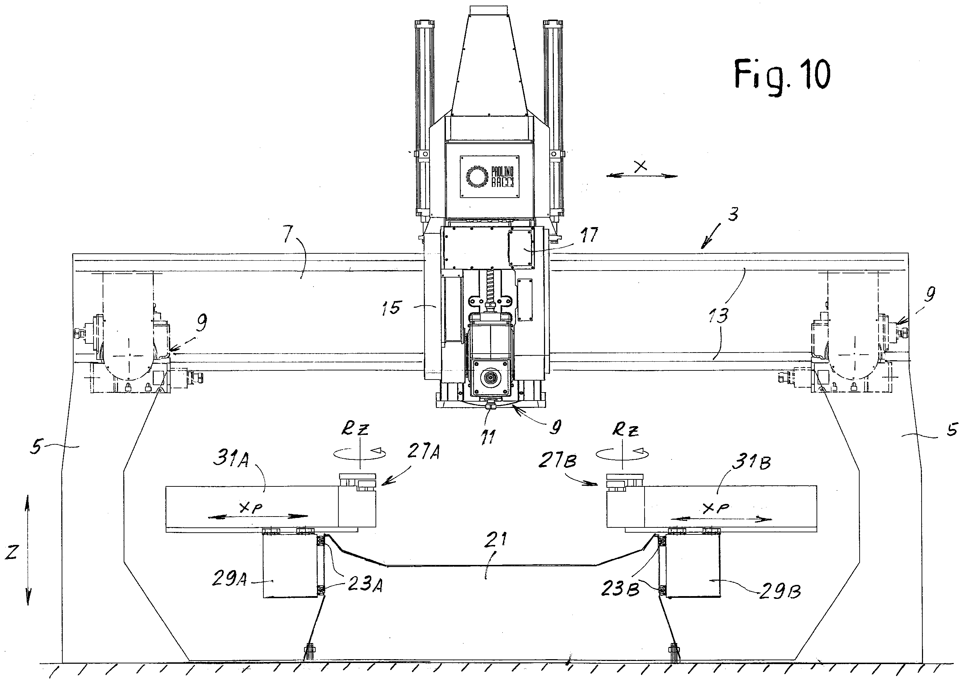

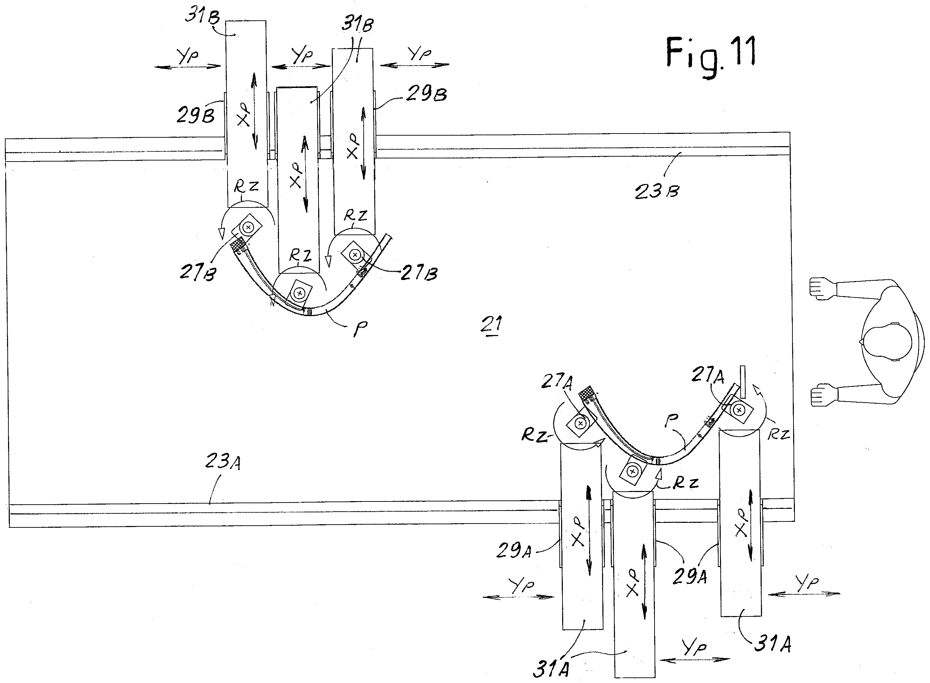

In the modified embodiment of Figs. 10 and 11 similar results are achieved by means of a lower number of components. The same reference numbers indicate identical or equivalent parts to those described above. The operating head, labeled again 9, is movable along the beam 7 of the gantry structure 3 through a combination of slides or carriages 15, 17. Below the beam 7 and orthogonally thereto the base 21 extends, provided with two series of guides 23A and 23B on the two sides. In this embodiment the slides 29A and 29B move directly along the guides 23A and 23B, contrary to the embodiment of Figs. 1 to 9 where two tables 25A, 25B move on the guides. Each slide 29A, 29B carries the respective second slide 31 A, 31B and each slide 31A, 31B supports the blocking members 27A, 27B.

The position of each blocking member 27A, 27B along the direction xp is adjusted by moving the respective slides 31A, 31B with respect to the slides 29A, 29B below, substantially in the same way as described above with reference to Figs. 1 to 9. The position of each blocking member 27A, 27B along the direction yp is adjusted by directly moving the slides 29A, 29B independently of each other along the guides 23A, 23B. To this end, each slide 29A, 29B has an own motorization system, for instance an electric motor with a pinion meshing with a rack fixed to the base 21, or a nut that engages a threaded bar carried by the base 21. The position of each blocking member 27A, 27B along the direction xp is adjusted by moving the slides 28A, 29B independently of each another along the guides 23A and 23B of the base 21.

During machining, the movement according to the numerically controlled axis Y is obtained by simultaneously moving all the slides 29A, or all the slides 29B along the guides 23A or 23B. Therefore during machining, contrary to what occurs during adjusting, the slides 29A on one hand and the slides 29B on the other hand move together as they would be virtually mounted on a common table equivalent to the table 25A or 25B respectively. All the movements are enabled by adequately programming the movements along the numerically controlled axis Y.

The blocking members 27A and the blocking members 27B are moved towards each other, to transfer the workpiece P from one group or series of blocking members 27A, 27B to the other, by moving together all the blocking members 27A and/or all the blocking members 27B and controlling the synchronous movement of the slides 31A and/or 31B. In this way these slides 31 A, 31B move as all of them would be virtually carried by a common slide equivalent to the slide 35A or 35B.

In the embodiment illustrated in Figs. 10 and 11 the opportunity of adjusting the blocking members 27A, 27B in the vertical direction zp has been omitted, but it should be understood that this may be provided in this embodiment too.

Figs. 10 and 11 show a further opportunity of adjusting each blocking member 27A, 27B according to a direction RZ of rotation. This adjustment occurs through rotation around a vertical axis indicated with z in Figs. 10 and 11. As it is clearly apparent from the plan view of Fig. 11, the opportunity of rotating each of the blocking members 27A and each of the blocking members 27B independently of one another allows these latter also to block workpieces P that have a more significant curvature in the horizontal plane and cannot be blocked by the blocking members 27A, 27B of Figs. 1 to 9.

It should be understood that this opportunity of adjusting each blocking member 27A, 27B independently of one another according to a direction RZ of rotation around the vertical axis may be also used in the embodiment of Figs. 1 to 9, thus increasing the flexibility of the machine.

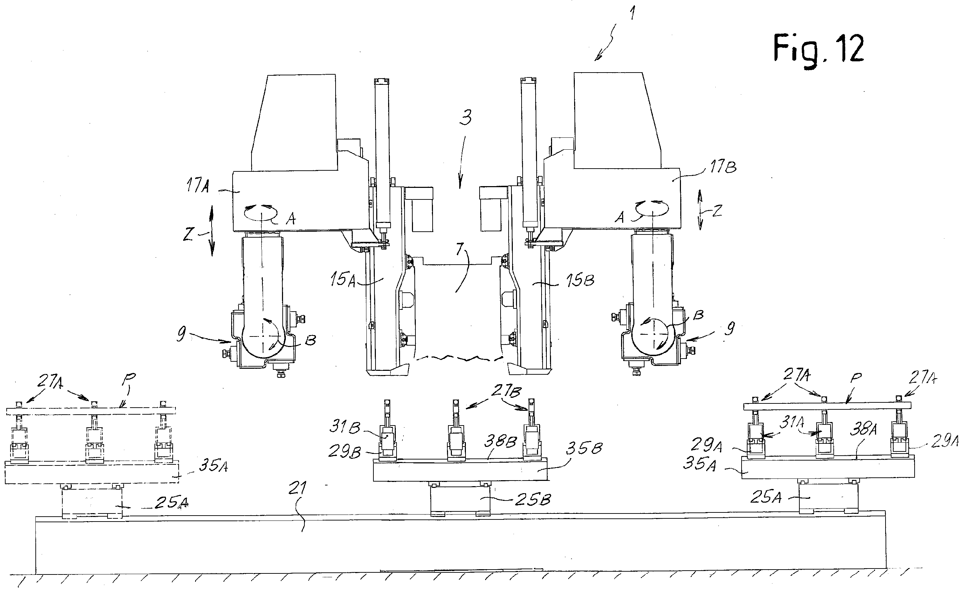

Fig. 12 shows a side view of a modified embodiment of a machining center according to the invention. In this case again the bearing structure 3 of the machining center 1 is represented like a gantry, just by way of example. The beam 7 carries two operating heads 9X and 9Y mounted at opposite sides of the gantry structure 3 and carried by a system of slides 15A, 17A, and 15B, 17B. Each head 9X and 9Y is equipped with tools and provided with a numerically controlled movement according to the vertical axis Z as well as with a further numerically controlled movement according to the horizontal axis X, parallel to the beam 7 of the gantry structure 3. Each operating head 9X, 9Y may be in turn provided with one or two numerically controlled movements according to rotation axes A, B as schematically illustrated in Fig. 12 and similarly to what has been described with reference to the previous Figs. 1 to 9.

In Fig. 12 a first table 25A is shown in two end positions along the base 21, and a second table 25B is shown in an intermediate position, corresponding to the working area below the beam 7 of the gantry structure 3. Each table 25A, 25B may be designed with blocking members 27A, 27B and respective slides, as described with reference to Figs. 1 to 9. Each blocking member 27A, 27B can be adjusted independently of the others along the directions xp, yp, and zp, and may be also angularly adjusted, if necessary. P indicates the workpieces mounted on the two tables 25A and 25B. In some embodiments the workpieces may be for example loaded on the left side (looking at the figure) of the machining centre and unloaded on the right side, or vice versa. In other embodiments the workpieces may be loaded and unloaded on the same side of the gantry structure 3.

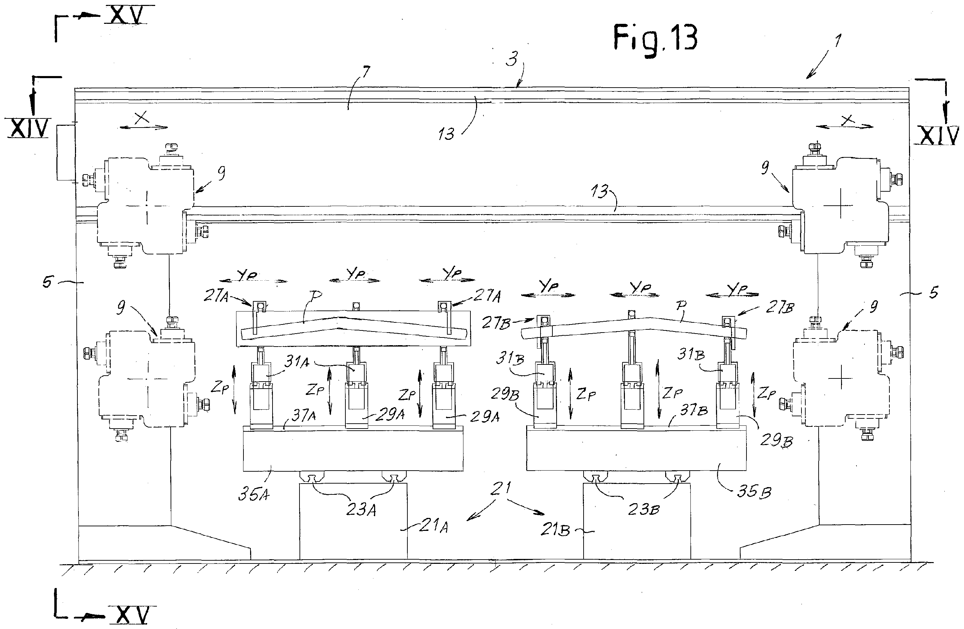

Figs. 13, 14, and 15 show a modified, less advantageous embodiment of the machining centre. The same numbers indicate identical or equivalent parts to those described above and illustrated in Figs. 1 to 9. In this embodiment two movable slides 35A, 35B are mounted on the two parts 21A and 21B of the base, which is indicated as a whole with number 21. The base 21 extends below the gantry structure 3, on which the operating head 9 moves according to the numerically controlled translation axes X and Y and rotation axes A and B. The two groups or series of blocking members 27A and 27B are mounted on the slides 35A and 35B with the interposition of the slides 31 A and 29A, and 31B and 29B, having the same structure and functions as those described above.

In this embodiment, contrarily to the previous ones, the blocking members 27A of the first series and 27B of the second series are aligned along directions orthogonal to the numerically controlled axis Y according to which the slides 35A, 35B move along the base 21.

Each blocking member 27A is carried by the respective slide 31A, which is in turn carried by the slide 29A on the common slide 35A. Similarly, each blocking member 27B is carried by a respective slide 31B, which is in turn carried by a slide 29B, movable on the common slide 35B.

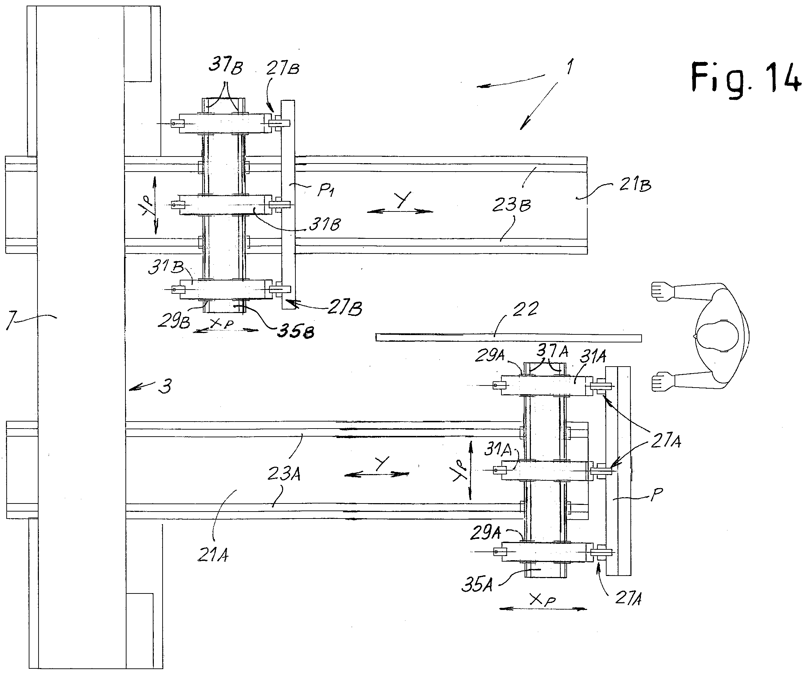

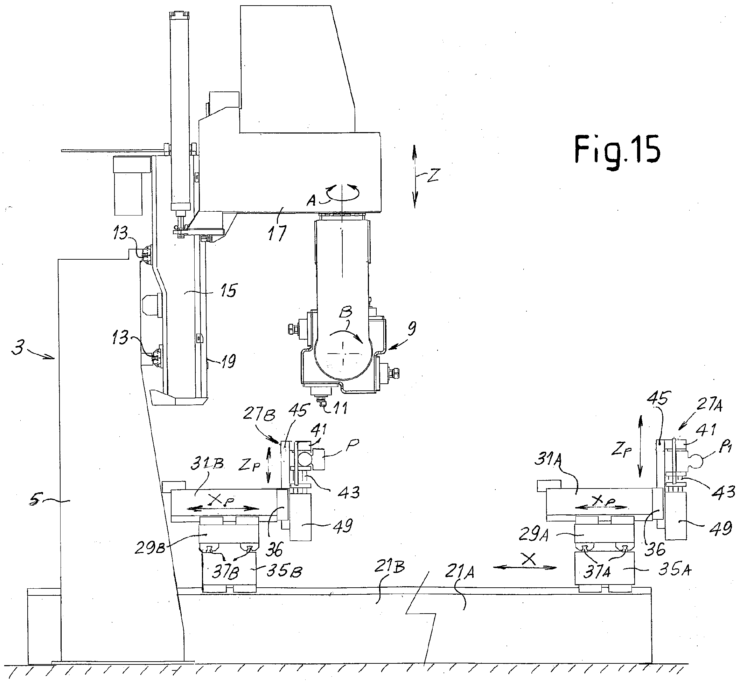

This arrangement allows adjustment according to the direction yp by moving the slides 29A, 29B along the guides 37A and 37B that, in this embodiment, are integral with the slide 35A and the slide 35B respectively. The adjustment according to the direction xp occurs by translating the slides 31A, 31B with respect to the slides 29A, 29B (see Figs. 14 and 15). These directions xp and yp are rotated by 90° with respect to the directions xp, yp indicated in the previous embodiments. In this case the adjusting direction xp is therefore parallel to the direction of the numerically controlled axis Y, whereas the adjusting direction yp is orthogonal to the numerically controlled axis Y. In the embodiment of Figs. 13, 14, and 15 the references xp and yp have been maintained to indicate the movements of the blocking members 27A and 27B with respect to the common slides 35A, 35B respectively, equivalent to the movements in Figs. 1 to 9, though these directions are rotated by 90° with respect to the numerically controlled axes X, Y, and Z of the machining centre.

Advantageously, each blocking member 27A and 27B may be adjusted, independently of the others, also according to the vertical direction zp, analogously to what described above with reference to Figs. 1 to 9.

The arrangement of Figs. 13, 14, and 15 allows workpieces P of significantly variable shape to be blocked without the need for specific equipment, thanks to the flexibility obtained by adjusting each blocking member 27A and 27B according to xp, yp, and zp, similarly to what has been described above with reference to Figs. 1 to 9. However, contrarily to what occurs in the embodiments of Figs. 1 to 9, the arrangement of Figs. 13 to 15 does not allow the significantly advantageous opportunity of automatically transferring a workpiece from one group or series of blocking members 27A, 27B to the other, thus performing an entire machining cycle completely automatically, without manual positioning and hence avoiding the need for the operator's intervention. In the configuration of Figs. 13 to 15 the presence of an operator is therefore required, for example at the end of the base 21 opposite to that where there is the gantry structure 3, to transfer the semi-finished workpiece from one of the slides 35A, 35B to the other. In this case, each workpiece is placed, for instance, on the slide 35A and blocked by means of the blocking members 27A; after a first series of machining operations, it is removed from the blocking members 27A, transferred to the slide 35B, and blocked here by means of the blocking members 27B to perform a second series of machining operations.

While it is transferred from one of the two groups of blocking members 27A, 27B to the other, the workpiece shall be also rotated so that the face previously facing, for example, the beams 45 of the blocking members 27A is now completely exposed and can be machined by means of the operating head 9.

In the embodiments described above each series of blocking members comprises the same number of blocking members, namely three in the illustrated examples, that are equal to one another. It should be understood that this is not strictly necessary. Although it is preferable, for a simpler management, to have blocking members equal to one another or symmetrical (for the two groups), it is however also possible to have a different number (greater or lower) of blocking members than that indicated above, as well as an unequal number of blocking members in each series. Blocking members of different shapes may be also used, for instance blocking members 27A different in shape from the blocking members 27B and/or different blocking members within the same series.

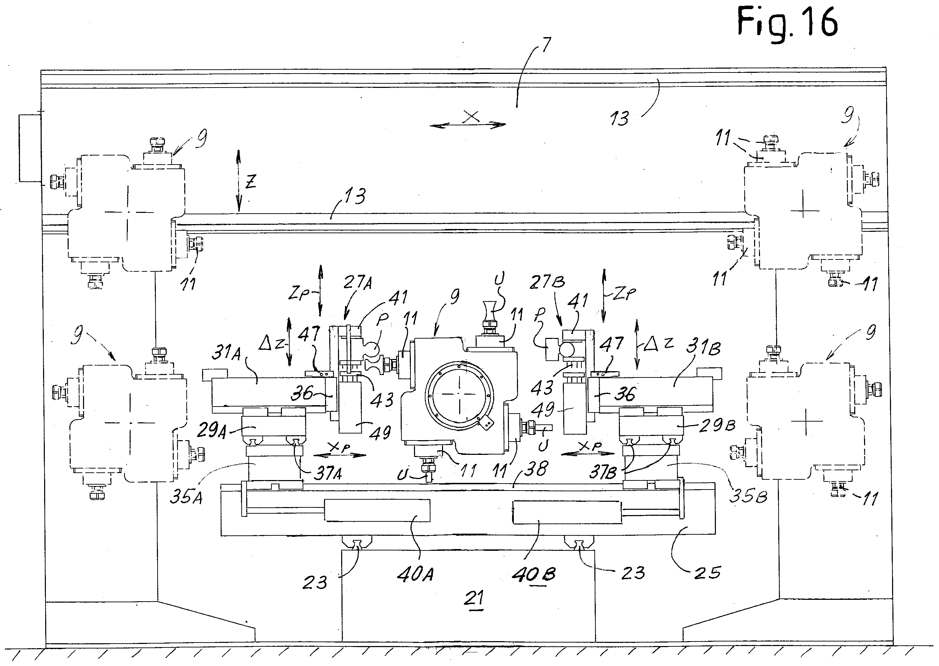

Fig. 16 shows a further embodiment of a machining centre 1. In this embodiment the machining center 1 comprises a bearing structure, onto which a working head or tool head moves, shown in Fig. 16 in four different positions. For the sake of simplicity, Fig. 16 does not show the head supporting slides, through which said head is moved, for instance, along two numerically controlled axes of translation, namely one horizontal, parallel to the beam of the bearing structure, and the other vertical.

The bearing structure illustrated by way of example in Fig. 16 is indicated as a whole with number 3. In the illustrated embodiment the bearing structure 3 is a gantry structure with two uprights 5 and one beam 7. Along the beam 7 a slide moves (not shown for the sake of simplicity of the drawing, but that may be equivalent to that illustrated, for example, in Fig. 7) carrying the operating head 9. In the illustrated embodiment the operating head 9 carries four spindles, for instance for electro-spindles, indicated with 11. Each electro-spindle 11 may carry a respective tool U, if necessary interchangeable. The machining center may be provided with a tool magazine and a tool changing system, not shown.

The shape of the head and the number of electro-spindles 11 with which it is provided may be different than those illustrated just by way of example in Fig. 16.

Fig. 16 schematically shows four end positions that the operating head 9 can achieve, and one intermediate position along the longitudinal extension of the beam 7.

Through guides 13, integral with the beam 7, the operating head 9 moves along a first numerically controlled horizontal translation axis X and along a numerically controlled vertical translation axis Z. The movements may be obtained by supporting the operating head 9 similarly to what is shown in Fig. 7. To this end a carriage 15 movable along the guides 13 may be provided, carrying a second carriage or slide 17 movable along guides 19, which are integral with the slide 15 and extend along the movement direction of the second numerically controlled vertical translation axis Z. The second slide or carriage 17 carries the operating head 9, which projects downwardly therefrom.

In the embodiment illustrated in Fig. 16, the operating head 9 is also provided with a double rotary motion according to numerically controlled rotation axes schematically indicated with A and B. In other less advantageous embodiments only one rotation axis may be provided. In more complex embodiments more than two numerically controlled rotation axes may be provided.

A base 21 extends below the beam 7. On the base 21 guides 23 are provided, on which a table 25 slides carrying a series or group of first blocking members 27A, and a series or group of second blocking members 27B. In the illustrated example each series comprises three blocking members. It should be understood that the number of blocking members may be different than that illustrated in the figure.

Each blocking member 27A, 27B is not directly carried by the table 25, but by a series of slides that are arranged between the table 25 and the blocking member and allow each blocking member to be adequately adjusted as described below.

More in particular, each blocking member may be designed as described above and illustrated in detail, for example in Fig. 8. Each blocking member 27A, 27B is carried by a first slide 29A, 29B respectively. Each blocking member 27A, 27B is carried by the respective slide 29A, 29B with the interposition of a respective second slide 31 A, 31 B. Each second slide 31 A, 31 B moves in an adjusting direction xp along guides 33A, 33B, with which the first slide 29A is provided; each blocking member 27A, 27B can be therefore adjusted in the direction xp independently of the other blocking members both of its series and the opposite series.

The first slides 29A of the first blocking members 27A are supported by a third common slide 35A and the first slides 29B of the second blocking members 27B are carried by a third common slide 35B. The slides 35A and 35B are provided with guides 37A and 37B respectively, along which the first slides 29A and 29B of the first and second blocking members 27A and 27B can be respectively adjusted, independently of each other, according to an adjusting direction yp orthogonal to the plane of Fig. 16.

With this arrangement, each blocking member 27A and each blocking member 27B can be adjusted according to the directions xp and yp independently of the other blocking members.

Preferably, each blocking member 27A and 27B can be adjusted also in a vertical direction according to the arrow zp. The vertical movement according to the direction zp for adjusting each blocking member 27A and 27B is independent of the other blocking members, so that each blocking member 27A, 27B can be substantially adjusted independently of the other blocking members along three orthogonal adjusting directions.

To adjust the blocking members 27A, 27B, on each second slide 31 A, 31B a guiding shoe 36A, 36B is for instance provided for each blocking member. The single blocking members 27A, 27B are guided along the guiding shoes 36A, 36B and can be therefore individually adjusted in vertical direction.

In advantageous embodiments, each blocking member 27A, 27B has a pair of jaws, wherein each jaw defines a clamping surface or a reference abutment surface for the workpiece. With specific reference to Fig. 8, showing one blocking member 27A, each blocking member has an upper jaw 41 and a lower jaw 43. The upper jaw 41 and the lower one 43 are connected to each other through a substantially vertical beam 45, and they move therefore integrally in the vertical direction zp. A brake 47 is provided to stop the beam 45 once the desired vertical position has been achieved. The lower jaw 43 is provided with an opening and closing movement according to the double arrow f43 controlled by an actuator, for instance a hydraulic or pneumatic cylinder-piston actuator 49, connected to the respective beam 45.

Each blocking member 27A and, analogously, each blocking member 27B can be translated upwards through a cylinder-piston actuator 50 carried by the respective second slide 31A, 31B. This movement is indicated with ΔZ; it allows the surface 41 X of the upper jaw 41 to be removed from the workpiece without friction between the workpiece and the same surface 41 X, when the workpiece shall be unloaded or transferred to the opposite blocking members mounted on the other table. The upward movement according to ΔZ controlled by the actuator 50 of the blocking member 27A or 27B is obviously combined with an opening movement of the jaws 41, 43 controlled by the actuator 49.

Advantageously, the upper jaw 41 defines a reference surface 41X and the lower jaw 43 defines a clamping surface 43X.

Each workpiece, schematically indicated with P, is thus blocked by each blocking member 27A, 27B by closing the jaws 41, 43 in a reference position defined by the reference surface 41X of the upper jaw 41. The vertical adjustment according to zp is performed as described below, to arrange each upper jaw 41 of each blocking member 27A, 27B in the adequate position to perform workings on the piece referred to the reference abutment surface 41 X.

To arrange the workpiece P so that it adequately projects from the jaws 41 and 43 and can be thus machined without interference between the tools carried by the operating head 9 and the jaws 41, 43, each blocking member 27A, 27B or at least two of the blocking members 27A or 27B are provided with auxiliary abutments 51, similarly to what has been illustrated with reference to the embodiments of Figs. 1 to 9.

In this embodiment the workpieces are machined one by one, as the two groups of blocking members 27A, 27B move integrally from the loading to the working position and vice versa, without possibility of reciprocal movement along the numerically controlled axis Y, parallel to the base 21, along which the single table 25 moves. Loading and unloading cannot therefore occur in shadow time. The other advantages described above are however maintained.

In the various embodiments described the blocking members 27A, 27B may be lowered to a height allowing to use the slides 31 A, 31B that support them like support planes for panels to be machined; in this way, the machining centre is suitable to machine workpieces with substantially flat extension or anyway workpieces with two prevalent dimensions, instead of elongated workpieces.

The embodiments described above and illustrated in the drawings have been explained in detail as examples of embodiments of the invention. It will be clearly apparent to those skilled in the art that modifications, variants, additions and omissions are possible, without however departing from the principles, the scope of the concept and the teachings of the present invention as defined in the attached claims. The scope of the invention shall be therefore determined exclusively based upon the widest interpretation of the attached claims, wherein these modifications, variants, additions and omissions are included within this scope. The terms "to comprise" and its derivatives do not exclude the presence of further elements or steps in addition to those specifically indicated in a given claim. The term "a" or "an" before an element, means or feature of a claim does not exclude the presence of a plurality of these elements, means or features. If a claim of a device claims a plurality of "means", some or all of these "means" can be actuated by a single component, member or structure. The enunciation of given elements, features or means in distinct depending claims does not exclude the possibility of combining said elements, features or means together. Any reference numbers in the appended claims are provided to facilitate reading the claims with reference to the description and the drawing, and do not limit the scope of protection represented by the claims.

## Claims

1. Machining center for working elongated pieces, comprising: a bearing structure (3) carrying at least one operating head (9) with one or more tool spindles (11) and movable along numerically controlled axes (X, Y, A, B); a series of first blocking members (27A); **characterised by**
a series of second blocking members (27B); wherein:
the series of first blocking members (27A) and the series of second blocking members (27B) are arranged and movable with respect to each other so as to move reciprocally towards each other said first blocking members (27A) and said second blocking members (27B) arranged facing each other, to transfer a workpiece, temporarily held by the first blocking members (27A), to the second blocking members (27B), or vice versa;
the first blocking members (27A) can be adjusted independently of one another according to at least two adjusting directions (xp; yp; zp), one of said directions (yp) allowing to modify the reciprocal distance of said first blocking members (27A);
the second blocking members (27B) can be adjusted independently of one another according to at least two adjusting directions (xp; yp; zp), one of said directions (yp) allowing to modify the reciprocal distance of said second blocking members (27B).

2. Machining center according to claim 1, wherein said series of first blocking members (27A) and said series of second blocking members (27B) are movable independently of each other along a base (21; 21A, 21B) between at least one loading and/or unloading position spaced from said bearing structure (3) and a working position near said bearing structure (3), according to numerically controlled respective axes (Y).

3. Machining center according to claim 2, wherein said adjusting direction (yp) allowing to modify the reciprocal distance of the blocking members (27A, 27B) is a horizontal direction, and wherein said numerically controlled axes (Y), according to which said blocking members (27A, 27B) are movable with respect to said base (21, 21A, 21B), are substantially horizontal.

4. Machining center according to claim 1 or 2 or 3, wherein the first blocking members (27A) and the second blocking members (27B) can be adjusted independently of each other according to said at least two adjusting directions (xp; yp; zp), wherein the operating head (9) is used as a reference abutment by being arranged each time in a given position along its numerically controlled axes through a numerically controlled system.

5. Machining center according to one of the previous claims, wherein each of said first blocking members (27A) and of said second blocking members (27B) comprises an upper jaw (41) and a lower jaw (43), movable with respect to each other to hold the workpiece there between; and wherein preferably auxiliary adjustable stops (51) are associated with at least some of said first blocking members (27A) and/or of said second blocking members (27B), said stops defining the position of the workpiece (P) with respect to said upper and lower jaws (41, 43) and can be adjusted in a direction orthogonal to the jaw opening and closing direction.

6. Machining center according to one of the previous claims, wherein the second (xp) of said at least two adjusting directions is horizontal; or the second (zp) of said at least two adjusting directions is vertical.

7. Machining center according to one of the previous claims, wherein each blocking member (27A, 27B) can be adjusted individually along three adjusting directions (xp, yp, zp), each blocking member being adjustable along each of said three adjusting directions independently of the other blocking members; and wherein said three adjusting directions are preferably orthogonal to one another.

8. Machining center according to one of the previous claims, wherein: one (zp) of said adjusting directions of the first blocking members (27A) and of the second blocking members (27B) is vertical; a brake (47) is associated with each of said first blocking members (27A) and said second blocking members (27B) to lock the respective blocking member (27A, 27B) in the desired position along said vertical adjusting direction (zp); and wherein said brake (47) is movable vertically by means of an actuator (50) to lift the respective blocking member (27A, 27B) during the opening phase.

9. Machining center according to one of the previous claims, wherein each of said first blocking members (27A) and of said second blocking members (27B) can be adjusted, independently of the other blocking members, around an axis (Rz) of rotation so as to take an angular position that can be set for each blocking member independently; and wherein said axis of rotation is preferably substantially vertical

10. Machining center according to one of the previous claims, wherein each of said first blocking members (27A) and of said second blocking members (27B) is carried by a respective first slide (29A, 29B), movable along the adjusting direction (yp) and allowing to adjust the reciprocal distance of the blocking members; and wherein each of said first blocking members (27A) and each of said second blocking members (27B) is preferably mounted on the respective first slide (29A, 29B) with the interposition of a respective second slide (31A, 31B), movable with respect to the first slide (29A, 29B) along the second adjusting direction (xp), said first adjusting direction (yp) and said second adjusting direction (xp) being horizontal and preferably substantially orthogonal to each other.

11. Machining center according to claim 10 when dependent on claim 2 or 3 wherein the first slides (29A, 29B) of the first blocking members (27A) and the first slides (29A, 29B) of the second blocking members (27B) are supported by respective common tables (25A, 25B) movable along said base (21, 21A, 21B); the common table (25A) carrying said first blocking members (27A) and the common table (25B) carrying said second blocking members (27B) being movable independently of each other along the base (21; 21A, 21B) according to said numerically controlled axes (Y).

12. Machining center according to claim 11, wherein said first blocking members (27A) and said second blocking members (27B) are carried by the respective common table (25A, 25B) with the interposition of a respective third slide (35A, 35B) arranged and controlled so as simultaneously to move the respective first blocking members (27A) and the second blocking members (27B) orthogonally to the movement direction (Y) of the respective movable table (25A, 25B) along said base (21; 21A, 21B).

13. Machining center according to claim 10 when dependent on claim 2 or 3, wherein the first slides (29A) of the first blocking members (27A) and the first slides (29B) of the second blocking members (27B) can slide along a first guide (23A) and along a second guide (23B) respectively, said guides being fixed to said base (21).

14. Machining center according to one of claims 2, 3, 11, 12, 13, wherein the series of first blocking members (27A) and the series of second blocking members (27B) are movable with respect to each other in a direction orthogonal to the movement direction of the first blocking members (27A) and of the second blocking members (27B) along said base (21; 21A, 21B) to move said first blocking members (27A) and said second blocking members (27B) towards and away from each other.

15. Machining center according to claim 14 when depending upon claim 11, wherein said series of first blocking members (27) and said series of second blocking members (27B) can be moved towards and away from each other through a movement of one, of the other, or of both the respective third slides (35A, 35B).

16. Machining center according to claim 14 when depending upon claim 12, wherein said series of first blocking members (27A) and said series of second blocking members (27B) can be moved towards and away from each other through a simultaneous movement of either all the second slides (31A) of the first blocking members (27A), all the second slides (31B) of the second blocking members (27B), or both the second slides (31A) of the first blocking members (27A) and the second slides (31B) of the second blocking members (27B).

17. Machining center according to one of the previous claims, wherein each of said first blocking members and of said second blocking members comprises an upper reference surface (41X) and a lower clamping surface (43X) movable towards the upper reference surface (41X), to hold the workpiece (P) between the upper reference surface (41X) and the lower clamping surface (43X).

18. Machining center according to claim 17, wherein said upper reference surface (41X) and said lower clamping surface (43X) of each of said first blocking members (27A) and of said second blocking members (27B) are vertically adjustable.

19. Machining center according to one of the previous claims, wherein each of said first blocking members (27A) and of said second blocking members (27B) has an upward motion for releasing the piece, to free it at the top after machining and to allow its removal without friction.

20. Machining center according to one of the previous claims, comprising two operating heads (9X, 9Y) carried by a same bearing structure (3).

21. Machining center according to one of the previous claims, wherein said bearing structure (3) is a gantry structure, with a beam (7) along which said at least one operating head (9) moves and below which said base (21; 21A, 21B) extends, and wherein said at least one operating head (9) preferably moves on said beam (7) according to a plurality of numerically controlled axes.

## Patentansprüche

1. Maschinencenter zur Bearbeitung länglicher Stücke mit:
einer Lagerstruktur (3), die mindestens einen Arbeitskopf (9) mit einer oder mehreren Werkzeugspindeln (11) trägt und bewegbar entlang numerisch gesteuerter Achsen (X, Y, A, B) ist, eine Reihe von ersten Blockierelementen (27A), **gekennzeichnet durch**
eine Reihe von zweiten Blockierelementen (27B), wobei:
die Reihe von ersten Blockierelementen (27A) und die Reihe von zweiten Blockierelementen (27B) mit Bezug aufeinander angeordnet und bewegbar sind, um sich hin- und hergehend zueinander zu bewegen, wobei die ersten Blockierelemente (27A) und die zweiten Blockierelemente (27B) aufeinander zu gerichtet sind, um ein Werkstück, das zeitweilig **durch** die ersten Blockierelemente (27A) gehalten wird, zu den zweiten Blockierelementen (27B) oder umgekehrt zu übertragen, wobei die ersten Blockierelemente (27A) unabhängig voneinander entsprechend von mindestens zwei Einstellrichtungen (xp, yp, zp) einstellbar sind, wobei eine der Richtungen (yp) es erlaubt, den hin- und hergehenden Abstand der ersten Blockierelemente (27A) zu modifizieren,
wobei die zweiten Blockierelemente (27B) unabhängig voneinander entsprechend mindestens zwei Einstellrichtungen (xp, yp, zp) einstellbar sind, wobei eine der Richtungen (yp) eine Modifikation des hin- und hergehenden Abstandes der zweiten Blockierelemente (27B) erlaubt.

2. Maschinencenter nach Anspruch 1, wobei die Reihe der ersten Blockierelemente (27A) und die Reihe der zweiten Blockierelemente (27B) unabhängig voneinander entlang einer Basis (21, 21A, 21B) zwischen mindestens einer Lade- und/oder Entladeposition, die von der Lagerstruktur (3) beabstandet ist, und einer Arbeitsposition nahe der Lagerstruktur (3) entsprechend numerisch gesteuerten jeweiligen Achsen (Y) bewegbar sind.

3. Maschinencenter nach Anspruch 2, wobei die Einstellrichtung (yp), die es erlaubt, den hin- und hergehenden Abstand der Blockierelemente (27A, 27B) zu modifizieren, eine Horizontalrichtung ist und wobei die numerisch gesteuerten Achsen (Y), entsprechend denen die Blockierelemente (27A, 27B) mit Bezug auf die Basis (21, 21A, 21B) bewegbar sind, im wesentlichen horizontal sind.

4. Maschinencenter nach Anspruch 1 oder 2 oder 3, wobei die ersten Blockierelemente (27A) und die zweiten Blockierelemente (27B) unabhängig voneinander entsprechend den mindestens zwei Einstellrichtungen (xp, yp, zp) eingestellt werden können, wobei der Arbeitskopf (9) durch Anordnung jedes Mal in einer gegebenen Position entlang seiner numerisch gesteuerten Achsen durch ein numerisch gesteuertes System als Referenzanschlag verwendet wird.

5. Maschinencenter nach einem der vorstehenden Patentansprüche, wobei jedes der ersten Blockierelemente (27A) und der zweiten Blockierelemente (27B) eine obere Klemmbacke (41) und eine untere Klemmbacke (43) aufweist, die mit Bezug aufeinander bewegbar sind, um das Werkstück dazwischen zu halten, und wobei vorzugsweise einstellbare Hilfsanschläge (51) zumindest einigen der ersten Blockierelemente (27A) und/oder der zweiten Blockierelemente (27B) zugeordnet sind, wobei die Anschläge die Position des Werkstücks (P) mit Bezug auf die oberen und unteren Klemmbacken (41, 43) definieren und in einer Richtung orthogonal zu der Öffnungs- und Schließrichtung der Klemmbacken einstellbar sein können.

6. Maschinencenter nach einem der vorstehenden Ansprüche, wobei die zweite (xp) der mindestens zwei Einstellrichtungen horizontal ist oder die zweite (zp) der mindestens zwei Einstellrichtungen vertikal ist.

7. Maschinencenter nach einem der vorstehenden Ansprüche, wobei jedes Blockierelement (27A, 27B) individuell entlang dreier Einstellrichtungen (xp, yp, zp) einstellbar ist, wobei jedes Blockierelement entlang jeder der drei Einstellrichtungen unabhängig von anderen Blockierelementen einstellbar ist und wobei die drei Einstellrichtungen vorzugsweise orthogonal zueinander sind.

8. Maschinencenter nach einem der vorstehenden Ansprüche, wobei eine (zp) der Einstellrichtungen der ersten Blockierelemente (27A) und der zweiten Blockierelemente (27B) vertikal ist, eine Bremse (47) jedem der ersten Blockierelemente (27A) und der zweiten Blockierelemente (27B) zugeordnet ist, um das jeweilige Blockierelement (27A, 27B) in der gewünschten Position entlang der vertikalen Einstellrichtung (zp) zu sperren, und wobei die Bremse (47) vertikal mittels eines Betätigungsgliedes (50) bewegbar ist, um das jeweilige Blockierelement (27A, 27B) während der Öffnungsphase anzuheben.

9. Maschinencenter nach einem der vorstehenden Ansprüche, wobei jedes der ersten Blockierelemente (27A) und der zweiten Blockierelemente (27B) unabhängig von den anderen Blockierelementen entlang einer Drehachse (Rz) eingestellt werden kann, um eine Winkelposition einzunehmen, die für jedes Blockierelement unabhängig eingestellt werden kann, und wobei die Drehachse vorzugsweise im wesentlichen vertikal ist.

10. Maschinencenter nach einem der vorstehenden Ansprüche, wobei jedes der ersten Blockierelemente (27A) und der zweiten Blockierelemente (27B) von einem jeweiligen ersten Schlitten (29A, 29B) getragen wird, der entlang der Einstellrichtung (yp) bewegbar ist und es erlaubt, den hin- und her gehenden Abstand der Blockierelemente einzustellen, und wobei jedes der ersten Blockierelemente (27A) und jedes der zweiten Blockierelemente (27B) vorzugsweise an dem jeweiligen ersten Schlitten (29 A, 29B) mit der Zwischenfügung eines zweiten jeweiligen Schlittens (31A, 31B) montiert ist, der mit Bezug auf den ersten Schlitten (29A, 29B) entlang der zweiten Einstellrichtung (xp) bewegbar ist, wobei die erste Einstellrichtung (yp) und die zweite Einstellrichtung (xp) horizontal und vorzugsweise im wesentlichen orthogonal zueinander sind.

11. Maschinencenter nach Anspruch 10, wenn von Anspruch 2 oder 3 abhängig, wobei die ersten Schlitten (29A, 29B) der ersten Blockierelemente (27A) und die ersten Schlitten (29A, 29B) der zweiten Blockierelemente (27B) durch jeweilige gemeinsame Tische (25A, 25B) getragen werden, die entlang der Basis (21, 21A, 21B) bewegbar sind, wobei der gemeinsame Tisch (22A), der die ersten Blockierelemente (27A) trägt, und der gemeinsame Tisch (25B), der die zweiten Blockierelemente (27B) trägt, unabhängig voneinander entlang der Basis (21, 21A, 21B) entsprechend den numerisch gesteuerten Achsen (Y) bewegbar sind.

12. Maschinencenter nach Anspruch 11, wobei die ersten Blockierelemente (27A) und die zweiten Blockierelemente (27B) durch von dem jeweiligen gemeinsamen Tisch (25A, 25B) mit Zwischenfügung eines jeweiligen dritten Schlittens (35 A, 35B) getragen werden, der so angeordnet und gesteuert ist, um simultan die jeweiligen ersten Blockierelemente (27A) und die zweiten Blockierelemente (Basis) orthogonal zu der Bewegungsrichtung (Y) des jeweiligen bewegbaren Tisches (24A, 24B) entlang der Basis (21, 21A, 21B) zu bewegen.

13. Maschinencenter nach Anspruch 10, wenn von Anspruch 2 oder 3 abhängig, wobei die ersten Schlitten (29A) der ersten Blockierelemente (27A) und die ersten Schlitten (29B) der zweiten Blockierelemente (27B) entlang einer ersten Führung (23A) bzw. entlang einer zweiten Führung (23B) bewegbar sind, wobei die Führungen an der Basis (21) befestigt sind.

14. Maschinencenter nach einem der Ansprüche 2, 3, 11, 12, 13, wobei die Reihe der ersten Blockierelemente (27A) und die Reihe der zweiten Blockierelemente (27B) mit Bezug aufeinander in einer Richtung orthogonal zu der Bewegungsrichtung der ersten Blockierelemente (27A) und der zweiten Blockierelemente (27B) entlang der Basis (21, 21A, 21B) bewegbar sind, um die ersten Blockierelemente (27A) und die zweiten Blockierelemente (27B) aufeinander zu und voneinander weg zu bewegen.

15. Maschinencenter nach Anspruch 14, wenn von Anspruch 11 abhängig, wobei die Reihe der ersten Blockierelemente (27) und die Reihe der zweiten Blockierelemente (27B) durch eine Bewegung des einen, des anderen oder beider jeweiliger dritter Schlitten (32A, 35B) aufeinander zu und voneinander weg bewegt werden können.

16. Maschinencenter nach Anspruch 14, wenn von Anspruch 12 abhängig, wobei die Reihe der ersten Blockierelemente (27A) und die Reihe der zweiten Blockierelemente (27B) durch eine gemeinsame Bewegung entweder aller zweiten Schlitten (31A) der ersten Blockierelemente (27A), aller zweiten Schlitten (31B) der zweiten Blockierelemente (27A) oder sowohl der zweiten Schlitten (31A) der ersten Blockierelemente (27A) als auch der zweiten Schlitten (31B) der zweiten Blockierelemente (27B) aufeinander zu und voneinander weg bewegt werden können.

17. Maschinencenter nach einem der vorstehenden Ansprüche, wobei jedes der ersten Blockierelemente und der zweiten Blockierelemente eine obere Bezugsfläche (41X) und eine untere Klemmfläche (43X) aufweist, die mit Bezug auf die obere Bezugsfläche (41X) bewegbar ist, um das Werkstück (P) zwischen der oberen Bezugsfläche (41X) und der unteren Klemmfläche (43X) zu halten.

18. Maschinencenter nach Anspruch 17, wobei die obere Bezugsfläche (41X) und die untere Klemmfläche (43X) jedes der ersten Blockierelemente (27A) und der zweiten Blockierelemente (27B) vertikal einstellbar sind.

19. Maschinencenter nach einem der vorstehenden Ansprüche, wobei jedes der ersten Blockierelemente (27A) und der zweiten Blockierelemente (27B) eine Aufwärtsbewegung zur Freigabe des Stücks hat, um es nach der Bearbeitung oben freizugeben und seine Entfernung ohne Reibung zu ermöglichen.

20. Maschinencenter nach einem der vorstehenden Ansprüche mit zwei Arbeitsköpfen (9X, 9Y) die durch dieselbe Lagerstruktur (3) getragen werden.

21. Maschinencenter nach einem der vorstehenden Ansprüche, wobei die Lagerstruktur eine Portalsstruktur mit einem Träger (7) ist, entlang dessen sich der mindestens eine Arbeitskopf (9) bewegt und unterhalb dessen sich die Basis (21, 21A, 21B) erstreckt, und wobei der mindestens eine Arbeitskopf (9) sich vorzugsweise auf dem Träger (7) entsprechend einer Anzahl von numerisch gesteuerten Achsen bewegt.

## Revendications

1. Centre d'usinage destiné à des pièces à usiner allongées, comprenant : une structure de support (3) portant au moins une tête opérationnelle (9) avec une ou plusieurs broches à outils (11) et déplaçable le long d'axes numériquement commandés (X, Y, A, B) ; une série de premiers organes de blocage (27A), **caractérisée par**
une série de seconds organes de blocage (27B), dans lequel :
la série de premiers organes de blocage (27A) et la série de seconds organes de blocage (27B) sont agencées et déplaçables l'une par rapport à l'autre de manière à se déplacer l'une vers l'autre, lesdits premiers organes de blocage (27A) et lesdits seconds organes de blocage (27B) étant agencés face à face, pour transférer une pièce à usiner, temporairement maintenue par les premiers organes de blocage (27A), vers les seconds organes de blocage (27B), ou vice versa ;
les premiers organes de blocage (27A) peuvent être réglés indépendamment les uns des autres suivant au moins deux directions de réglage (xp, yp, zp), l'une desdites direction (yp) permettant de modifier la distance desdits premiers organes de blocage entre eux (27A) ;
les seconds organes de blocage (27B) peuvent être réglés indépendamment les uns des autres suivant au moins deux directions de réglage (xp ; yp ; zp), l'une desdites directions (yp) permettant de modifier la distance desdites seconds organes de blocage entre eux (27B).

2. Centre d'usinage selon la revendication 1, dans lequel ladite série de premiers organes de blocage (27A) et ladite série de seconds organes de blocage (27B) sont déplaçables indépendamment l'une de l'autre le long d'une base (21 ; 21A ; 21B) entre au moins une position de charge et/ou de décharge espacée par rapport à ladite structure de support (3) et une position de travail près de ladite structure de support (3), suivant des axes respectifs numériquement commandés (Y).

3. Centre d'usinage selon la revendication 2, dans lequel ladite direction de réglage (yp) permettant de modifier la distance des organes de blocage (27A, 27B) entre eux est une direction horizontale et dans lequel lesdits axes commandés numériquement (Y), suivant lesquels lesdits organes de blocage (27A, 27B) sont déplaçables par rapport à ladite base (21, 21A, 21B), sont sensiblement horizontaux.

4. Centre d'usinage selon la revendication 1 ou 2 ou 3, dans lequel les premiers organes de blocage (27A) et les seconds organes de blocage (27B) peuvent être réglés indépendamment les uns des autres suivant lesdites deux ou plus directions de réglage (xp ; yp ; zp), dans lequel la tête opérationnelle (9) est utilisée comme butée de référence en étant agencée à chaque fois dans une position donnée le long de ses axes commandés numériquement à l'aide d'un système commandé numériquement.

5. Centre d'usinage suivant l'une des revendications précédentes, dans lequel chacun desdits premiers organes de blocage (27A) et desdits seconds organes de blocage (27B) comprend une mâchoire supérieure (41) et une mâchoire inférieure (43), déplaçable l'une par rapport à l'autre pour maintenir la pièce à usiner entre elles ; et dans lequel de préférence des butées auxiliaires réglables (51) sont associées avec certains au moins desdits premiers organes de blocage (27a) et/ou desdits seconds organes de blocage (27B), lesdites butées définissant la position de la pièce à usiner (P) par rapport auxdites mâchoires supérieure et inférieure (41, 43) et peuvent être réglées dans une direction orthogonale à la direction d'ouverture et de fermeture de la mâchoire.

6. Centre d'usinage selon l'une des revendications précédentes, dans lequel la deuxième (xp) desdites deux ou plus directions de réglage est horizontale ; ou la troisième (zp) desdites deux ou plus directions de réglage est verticale.

7. Centre d'usinage selon l'une des revendications précédentes, dans lequel chaque organe de blocage (27A, 27B) peut être réglé individuellement suivant trois directions de réglage (xp, yp, zp), chaque organe de blocage étant réglable le long de chacune desdites trois directions de réglage indépendamment des autres organes de blocage ; et dans lequel lesdites trois directions de réglage sont de préférence orthogonales les unes aux autres.

8. Centre d'usinage selon l'une des revendications précédentes, dans lequel : l'une (zp) desdites directions de réglage des premiers organes de blocage (27a) et des seconds organes de blocage (27B) est verticale ; un frein (47) est associé avec chacun desdits premiers organes de blocage (27A) et desdits seconds organes de blocage (27B) pour verrouiller l'organe de blocage correspondant (27A, 27B) dans la position souhaitée le long de ladite direction de réglage verticale (zp) ; et dans lequel ledit frein (47) est déplaçable verticalement au moyen d'un organe d'actionnement (50) pour soulever l'organe de blocage correspondant (27A, 27B) durant la phase d'ouverture.

9. Centre d'usinage selon l'une des revendications précédentes, dans lequel chacun desdits premiers organes de blocage (27A) et desdits seconds organes de blocage (27B) peut être réglé, indépendamment des autres organes de blocage, autour d'un axe (Rz) de rotation de manière à prendre une position angulaire qui peut être définie pour chaque organe de blocage de manière indépendante ; et dans lequel ledit axe de rotation est de préférence sensiblement vertical.

10. Centre d'usinage selon l'une des revendications précédentes, dans lequel chacun desdits premiers organes de blocage (27A) et desdits seconds organes de blocage (27B) est porté par un premier coulisseau respectif (29A, 29B), déplaçable le long de la direction de réglage (yp) et permettant de régler la distance des organes de blocage les uns par rapport aux autres ; et dans lequel chacun desdits premiers organes de blocage (27A) et chacun desdits seconds organes de blocage (27B) est de préférence monté sur le premier coulisseau respectif (29A, 29B) avec l'interposition d'un second coulisseau respectif (31A, 31B), déplaçable par rapport au premier coulisseau (29A, 29B) le long de la deuxième direction de réglage (xp), ladite première direction de réglage (yp) et ladite deuxième direction de réglage (xp) étant horizontales et de préférence sensiblement orthogonales l'une à l'autre.

11. Centre d'usinage selon la revendication 10 lorsqu'elle est dépendante de la revendication 2 ou 3, dans lequel les premiers coulisseaux (29A, 29B) des premiers organes de blocage (27A) et les premiers coulisseaux (29A, 29B) des seconds organes de blocage (27B) sont supportés par des tables communes respectives (25A, 25B) déplaçables le long de ladite base (21, 21A, 21B) ; la table commune (25A) portant lesdits premiers organes de blocage (27A) et la table commune (25B) portant lesdits seconds organes de blocage (27B) étant déplaçables indépendamment l'une de l'autre le long de la base (21 ; 21A ; 21B) suivant lesdits axes numériquement commandés (Y).

12. Centre d'usinage selon la revendication 11, dans lequel lesdits premiers organes de blocage (27A) et lesdits seconds organes de blocage (27B) sont portés par la table commune respective (25A, 25B) avec l'interposition d'un troisième coulisseau respectif (35A, 35B) agencé et commandé de manière à déplacer simultanément les premiers organes de blocage (27A) respectifs et les seconds organes de blocage (27B) orthogonalement à la direction de mouvement (Y) de la table déplaçable respective (25A, 25B) le long de ladite base (21 ; 21A, 21B).

13. Centre d'usinage selon la revendication 10 lorsqu'elle est dépendante de la revendication 2 ou 3, dans lequel les premiers coulisseaux (29A) des premiers organes de blocage (27A) et les premiers coulisseaux (29B) des seconds organes de blocage (27B) peuvent coulisser le long d'un premier élément de guidage (23A) et le long d'un second élément de guidage (23B) respectivement, lesdits éléments de guidage étant fixés à ladite base (21).

14. Centre d'usinage selon les revendications 2, 3, 11, 12, 13, dans lequel la série de premiers organes de blocage (27A) et la série de seconds organes de blocage (27B) sont déplaçables l'une par rapport à l'autre dans une direction orthogonale à la direction de mouvement des premiers organes de blocage (27A) et des seconds organes de blocage (27B) le long de ladite base (21 ; 21A, 21B) pour rapprocher et éloigner lesdits premiers organes de blocage (27A) et lesdits seconds organes de blocage (27B) les uns des autres.

15. Centre d'usinage selon la revendication 14 lorsqu'elle est dépendante de la revendication 11, dans lequel ladite série de premiers organes de blocage (27) et ladite série de seconds organes de blocage (27B) peuvent être rapprochées et éloignées l'une de l'autre par le mouvement de l'une, de l'autre ou des deux troisièmes coulisseaux respectifs (35A, 35B).

16. Centre d'usinage selon la revendication 14 lorsqu'elle est dépendante de la revendication 12, lorsque ladite série de premiers organes de blocage (27A) et ladite série de seconds organes de blocage (27B) peuvent être rapprochées et éloignées l'une de l'autre par le mouvement simultané de tous les deuxièmes coulisseaux (31A) des premiers organes de blocage (27A), de tous les deuxièmes coulisseaux (31B) des seconds organes de blocage (27B) ou à la fois des deuxièmes coulisseaux (31A) des premiers organes de blocage (27A) et des deuxièmes coulisseaux (31B) des seconds organes de blocage (27B).

17. Centre d'usinage selon l'une des revendications précédentes, dans lequel chacun desdits premiers organes de blocage et desdits seconds organes de blocage comprend une surface de référence supérieure (41X) et une surface de fixation inférieure (43X) déplaçable vers la surface de référence supérieure (41X), pour maintenir la pièce à usiner (P) entre la surface de référence supérieure (41X) et la surface de fixation inférieure (43X).

18. Centre d'usinage selon la revendication 17, dans lequel ladite surface de référence supérieure (41X) et ladite surface de fixation inférieure (43X) de chacun desdits premiers organes de blocage (27A) et desdits seconds organes de blocage (27B) sont réglables verticalement.

19. Centre d'usinage selon l'une des revendications précédentes, dans lequel chacun desdits premiers organes de réglage (27A) et desdits seconds organes de réglage (27B) a un déplacement vers le haut pour relâcher la pièce, la libérer au sommet après l'usinage et permettre son retrait sans friction.

20. Centre d'usinage selon l'une des revendications précédentes, comprenant deux têtes opérationnelles (9X, 9Y) portées par une même structure de support (3).

21. Centre d'usinage selon l'une des revendications précédentes, dans lequel ladite structure de support (3) est une structure de portique, avec une poutre (7) le long de laquelle ladite ou lesdites tête(s) opérationnelle(s) (9) se déplace et sous laquelle ladite base (21 ; 21A, 21B) s'étend, et dans lequel ladite ou lesdites têtes opérationnelles (9) se déplace(nt) de préférence sur ladite poutre (7) suivant une pluralité d'axes commandés numériquement.
